# EUROPÄISCHE PATENTSCHRIFT

(11) **EP 1 259 365 B1**
(45) Veröffentlichungstag und Bekanntmachung des Hinweises auf die Patenterteilung: **29.06.2005**
(21) Anmeldenummer: 01911612.8
(22) Anmeldetag: 07.02.2001
(51) Int. Cl.: B29C 44/34, B29C 35/08, B29C 35/10

(54) **VERFAHREN UND VORRICHTUNG ZUM THERMISCHEN VERBINDEN VON POLYMERSCHAUMPARTIKEL**
METHOD AND DEVICE FOR THERMALLY BONDING EXPANDED POLYMER PARTICLES
PROCEDE ET DISPOSITIF POUR LIER THERMIQUEMENT DES PARTICULES DE MOUSSE POLYMERE

(30) Priorität: 29.02.2000 DE 10009665
(43) Veröffentlichungstag der Anmeldung: 27.11.2002
(73) Patentinhaber: Fraunhofer-Gesellschaft zur Förderung der angewandten Forschung e.V., 80686 München (DE)
(72) Erfinder: ZIEGLER, Maik, 76327 Pfinztal (DE); KAUFFMANN, Axel, 71263 Weil der Stadt (DE); HOFMANN, Knut, 75015 Bretten (DE)
(86) Internationale Anmeldenummer: PCT/EP2001/001290
(87) Internationale Veröffentlichungsnummer: WO 2001/064414

(56) Entgegenhaltungen:
- GB-A- 1 537 481
- US-A- 2 604 665
- US-A- 4 596 682

## Beschreibung

Die Erfindung betrifft ein Verfahren zum thermischen Verbinden von in einer Schüttung angeordneten Partikeln aus wenigstens einem geschäumten, vorgeschäumten und/oder schäumbaren Polymer zu Formteilen mittels hochfrequenter elektromagnetischer Strahlung, indem die Partikel bei Anwesenheit eines elektromagnetische Strahlung absorbierenden, flüssigen Medium unter Kontakt ihrer Grenzflächen und Einwirken der Strahlung zumindest oberflächig miteinander zu dem Formteil verschmolzen werden und dieses anschließend abgekühlt wird. Ferner betrifft die Erfindung eine Vorrichtung gemäß dem Oberbegriff des Anspruchs 34 zur Durchführung eines solchen Verfahrens mit einem die Partikel aufnehmenden Formraum und wenigstens einem hochfrequenten elektromagnetischen Strahlungsfeld. Ein solches Verfahren und eine solche Vorrichtung sind aus der WO-A-90 08 642 bekannt.

Derartige Verfahren, bei denen geschäumte oder vorgeschäumte Polymerpartikel mit einem elektromagnetische Strahlung absorbierenden Medium benetzt oder beschichtet in eine Form eingebracht, diese verschlossen und die Partikel mittels elektromagnetischer Strahlung verschmolzen und/oder unter Freisetzung eines Treibmittels zusätzlich expandiert werden, sind bekannt (US 3,010,157, US 3,193,874, US 3,253,064, US 4,298,324, US 4,454,081, DE 196 48 525, DE 196 48 526, DE 196 48 093, DE 196 48 094, DE 196 54 860, DE 198 60 611, EP 0 886 590). Bei diesen Verfahren wird das die Partikel benetzende Medium unter hochfrequenter elektromagnetischer Strahlung, deren Frequenz etwa der Resonanzfrequenz der Moleküle des Mediums entspricht, erhitzt und die Wärme an die Polymerpartikel abgegeben. Durch die Wärme verschmelzen die Partikel und expandieren gegebenenfalls unter Freisetzung eines Treibmittels. Die Polymerpartikel können ihrerseits die elektromagnetische Strahlung absorbieren oder auch bezüglich der Strahlung durchlässig sein.

Wird ein flüssiges strahlungsabsorbierendes Medium eingesetzt, so wird es in der Regel verdampft und gleichmäßig in der Form verteilt, wobei sein Siedepunkt durch die Zugabe von Hilfsstoffen und den Druck in der Form beeinflußt werden kann. Die WO 90/08642 beschreibt ein derartiges Verfahren zur Herstellung von Formteilen aus expandierbaren Kunststoffpartikeln in einem Formwerkzeug, das in einem Mikrowellenfeld rotierbar ist.

Aus der EP 0 705 682 A1 ist ein Verfahren zum thermischen Verbinden von Schaumstoffpartikeln unterschiedlicher Polymere bekannt, wobei die Partikel wenigstens bereichsweise mit einem Mikrowellen absorbierenden Medium beschichtet und unter Kontakt ihrer Grenzflächen in dem Mikrowellenfeld miteinander verschweißt werden.

Weiterhin sind solche Verfahren auch zur kontinuierlichen Herstellung von im wesentlichen strangförmigen Formteilen aus Polymerschaumpartikeln bekannt (US 4 173 608). Der DE 198 29 562 ist ein kontinuierliches Verfahren entnehmbar, bei dem die benetzten Polymerpartikel zwischen umlaufenden Trägerbändern aufgegeben und als dichte Packung an einer Mikrowellen-Energiequelle kontinuierlich vorbeigeführt und verschweißt werden. Art und Menge des Mediums werden so gewählt, daß den Partikeln bei dem herrschenden Umgebungsdruck die zur Herstellung des Verbundes notwendige Schmelzwärme zugeführt wird. Die DE 196 48 093 beschreibt ein kontinuierliches Verfahren, indem die beschichteten oder benetzten Partikel komprimiert, einer Art Schneckenextruder aufgegeben und durch ein Mikrowellenfeld einer das Extrudergehäuse umgebenden Mikrowellen-Energiequelle unter Verschmelzen der Partikel geführt werden. Als Mikrowellen absorbierendes Medium wird Wasser eingesetzt, welches bevorzugt mit Tensiden versetzt wird, um einen möglichst dünnen Wasserfilm auf den Partikeln zu erzielen, welcher angeblich die Wirkung der Mikrowellenenergie begünstigt und zu einer schnellen Bildung von Heißdampf führt.

Sämtlichen bekannten Verfahren ist gemeinsam, daß die zu verbindenden Polymerpartikel lediglich mit dem strahlungsabsorbierenden Medium beschichtet oder benetzt (gecoatet) werden, wobei gegebenenfalls durch bereichsweise stärkeres Beschichten der Partikel in diskreten Bereichen des Formteils höhere Temperaturen erzielt werden können, um das Formteil z.B. in diesen Bereichen stärker aufzuschäumen. Wird ein festes, strahlungsabsorbierendes Medium, wie Ruß, Metallpulver od. dgl., zum Beschichten der Polymerpartikel verwendet, so kann dies bei Einwirken der elektromagnetischen Strahlung in unmittelbarer Umgebung der Feststoffpartikel zur Überhitzung (Hot-Spots) führen, wodurch die Schaumstruktur beeinträchtigt wird. In unbeschichteten Bereichen findet hingegen gar kein Verschmelzen der Polymerpartikel statt.

Bei Benetzen der Polymerpartikel mit einem flüssigen, elektromagnetische Strahlung absorbierenden Medium wird aufgrund des dünnen Flüssigkeitsfilms häufig keine ausreichend hohe Temperatur erreicht, da die geringen Flüssigkeitsmengen einerseits in die Partikel hineindiffundieren, andererseits unmittelbar verdampfen, wobei die Dampfphase aufgrund ihrer geringen Dichte ein erheblich geringeres Absorptionsvermögen für die elektromagnetische Strahlung aufweist und die Partikel folglich nicht homogen anschmelzen. Sowohl bei der Beschichtung mit einem festen als auch bei der Benetzung mit einem flüssigen strahlungsabsorbierenden Medium kommt es darüber hinaus zu Einschlüssen von Restluft im Partikelschaum, die in einer verminderten Festigkeit des Partikelschaums resultieren und zu einem Auflösen des Schaumverbundes führen, wie es beispielsweise bei stoßabsorbierenden Verpackungsmaterialien aus Polystyrol-Partikelschaum beobachtet wird.

Der Erfindung liegt die Aufgabe zugrunde, ein Verfahren der eingangs genannten Art unter Vermeidung der vorgenannten Nachteile dahingehend weiterzuentwickeln, daß eine homogene und innige Verbindung der Schaumpartikel sichergestellt wird. Sie ist ferner auf eine Vorrichtung zur Durchführung eines solchen Verfahrens gerichtet.

Der verfahrenstechnische Teil dieser Aufgabe wird erfindungsgemäß bei einem Verfahren mit den Merkmalen des Oberbegriffs des Anspruchs 1 dadurch gelöst, daß das Hohlraumvolumen der Schüttung vor oder während der Bestrahlung im wesentlichen vollständig mit dem flüssigen Medium ausgefüllt wird.

Erfindungsgemäß ist also vorgesehen, daß die in einer Schüttung angeordneten Polymerpartikel nicht nur mit dem strahlungsabsorbierenden Medium benetzt, sondern das Hohlraumvolumen der Schüttung zur Gänze mit dem flüssigen Medium ausgefüllt wird. Durch das im Vergleich zu den herkömmlichen Verfahren erhöhte Verhältnis des strahlungsabsorbierenden Mediums zu den Polymerpartikeln ist eine ausreichende Absorption der hochfrequenten Strahlung sichergestellt, bevor das flüssige Medium insbesondere zumindest teilweise verdampft wird. Die Partikel sind einer gleichmäßig hohen Temperatur ausreichend lange exponiert, um eine vollflächige, innige, homogene und dauerhafte Schmelzverbindung zwischen allen Partikeln zu gewährleisten. Die beim Stand der Technik aufgrund einer unzureichenden oder ungleichmäßigen Beschichtung oder Benetzung auftretenden Defekte sind bei dem erfindungsgemäßen Verfahren wirksam vermieden.

In bevorzugter Ausführung wird hochfrequente elektromagnetische Strahlung in einem Frequenzbereich zwischen 100 MHz und 10 GHz, also Mikrowellenstrahlung verwendet.

Das erfindungsgemäße Verfahren eignet sich insbesondere zum thermischen Verbinden von geschäumten Polymerpartikeln aus Polyolefinen, da Polyolefine für hochfrequente elektromagnetische Strahlung im wesentlichen durchlässig sind und nur bei längerer Strahlungsexposition eine molekulare Schädigung erfahren. Es ermöglicht aufgrund der erhöhten Menge des strahlungsabsorbierenden Mediums und des damit höheren Wärmeangebotes insbesondere die Herstellung von Partikelschäumen aus Schaumpartikeln mit hohem Schmelzpunkt, beispielsweise aus Polyethylen (PE), Polypropylen (PP), Polyalkylenterephthalat, insbesondere Polyethylenterephthalat (PET) od. dgl., welche einen Schmelzpunkt von etwa 160°C (PE, PP) bzw. 260°C (PET) aufweisen. Es ist selbstverständlich auch zur Herstellung von Partikelschäumen aus Schaumpartikeln mit einem deutlich geringeren Schmelzpunkt, beispielsweise aus Polystyrol (PS), geeignet.

In bevorzugter Ausführung werden geschäumte Polymerpartikel aus expandierbaren Polymeren eingesetzt, welche sich bei der Erwärmung ausdehnen, so daß sie gegeneinander drücken und aufgrund ihrer Flexibilität eine größere Kontaktfläche zum Verschmelzen entsteht. Es werden z.B. Partikel aus expandierbarem PE (EPE), expandierbarem PP (EPP), expandierbarem PS (EPS) oder expandierbarem Polyalkylenterephthalat, insbesondere aus expandierbarem PET (EPET) eingesetzt.

Als strahlungsabsorbierende Medien kommen vornehmlich polare Flüssigkeiten, wie Wasser, Alkohole, Carbonsäuren, insbesondere Fettsäuren, od. dgl., wie auch Mischungen der genannten Flüssigkeiten oder mit anderen Flüssigkeiten oder Additiven (Dispersionen oder Suspensionen) in Frage. Das strahlungsabsorbierende Medium kann zumindest teilweise verdampft und hinsichtlich seines Siedepunktes je nach Schmelzpunkt der eingesetzten Polymerpartikel ausgewählt werden. Zur Erhöhung der Adhäsion können dem Medium Zusatzstoffe, wie Tenside, Detergentien od. dgl., zugesetzt werden.

Eine bevorzugte Ausführungsform sieht vor, daß die Partikelschüttung in einem Formraum eingeschlossen wird. Handelt es sich bei den Partikeln um expandierbare Polymerpartikel, so können sie in loser Schüttung dem Formraum aufgegeben werden. In jedem Fall kann die Schüttung in dem Formraum kompaktiert werden, um die Polymerpartikel zumindest während des Einwirkens der hochfrequenten elektromagnetischen Strahlung unter mechanischem Druck und damit in Kontakt zu halten. Auch bilden sich aufgrund der Kompressibilität der Partikel größere Kontaktflächen.

In bevorzugter Ausführung wird das Massenverhältnis zwischen den Partikeln und dem das Hohlraumvolumen der Schüttung ausfüllenden, flüssigen Medium durch den Druck in dem Formraum während des Aufgebens der Partikel gesteuert. Da das strahlungsabsorbierende, flüssige Medium eine geringere Kompressibilität als die geschäumten oder vorgeschäumten Polymerpartikel aufweist, kann das gewünschte Massenverhältnis zwischen den Partikeln und dem flüssigen Medium durch den Druck in dem Formraum eingestellt werden, indem bei Erhöhen des Drucks das Volumen des flüssigen Mediums -soweit es nicht bewußt verdrängt wird- weitestgehend unverändert bleibt, während das Volumen der kompressiblen Polymerpartikel verringert wird, so daß das mit steigendem Druck abnehmende Volumen der Polymerpartikel entweder durch zusätzliche Polymerpartikel oder zusätzliche Mengen des flüssigen Mediums ersetzt werden kann. Auf diese Weise kann sowohl die von dem Druck im Formraum abhängige Siedetemperatur des strahlungsabsorbierenden Mediums und damit die Schweißtemperatur als auch die zum vollständigen Verdampfen des flüssigen Mediums erforderliche Zeit eingestellt werden.

Um eine vollständige Ausfüllung des Hohlraumvolumens der Schüttung der Polymerpartikel mit dem strahlungsabsorbierenden Medium zu erreichen, sieht eine Ausführungsform des Verfahrens vor, daß die Partikel in den Formraum aufgegeben werden und das flüssige Medium unter Verdrängen der in der Partikelschüttung befindlichen Luft in den Formraum eingespeist wird. Vorzugsweise wird das flüssige Medium in den die Partikel aufnehmenden Formraum steigend eingespeist, um für eine einwandfreie Entlüftung des Formraums und somit für ein vollständiges Auffüllen des Hohlraumvolumens der Partikelschüttung mit dem flüssigen Medium zu sorgen.

In diesem Fall kann die Partikelschüttung in dem Formraum mechanisch komprimiert und das flüssige Medium anschließend eingespeist werden. Selbstverständlich können die Partikel auch durch Druckbeaufschlagen des Formraums mit dem flüssigen Medium komprimiert werden. Im Falle des Einsatzes expandierbarer Polymerpartikel, wie EPE, EPP, EPS, EPET oder dergleichen, welche sich während des thermischen Verbindens mittels hochfrequenter elektromagnetischer Strahlung ausdehnen, so daß das Hohlraumvolumen der Partikelschüttung während der Bestrahlung verringert wird, kann das Hohlraumvolumen anfangs auch nur teilweise mit dem strahlungsabsorbierenden Medium ausgefüllt werden, wobei sichergestellt sein muß, daß das Medium nach Expandieren der Polymerpartikel und Verdrängen der Restluft das Hohlraumvolumen der Schüttung im wesentlichen vollständig ausfüllt, um eine einwandfreie Schmelzverbindung der Partikel zu gewährleisten.

Weiterhin kann zumindest ein Teil der Partikel in das flüssige Medium eindispergiert und die Dispersion, insbesondere unter Druck, in den Formraum aufgegeben werden. Die Dispersion wird bevorzugt mittels eines Schnecken- oder Kolbenverdrängers in den Formraum aufgegeben.

Alternativ kann das flüssige Medium in den Formraum eingespeist und die Partikel unter Verdrängen des flüssigen Mediums in den Formraum aufgegeben werden. Insbesondere ist es möglich, das flüssige Medium in dem Formraum unter Druck ("Staudruck") zu setzen und die Partikel mit höherem Druck aufzugeben.

Beim Einsatz von Partikeln aus expandierbaren Polymeren können diese auf an sich bekannte Weise auch zusätzlich in Druckkammern vorkomprimiert werden. Derartige Partikel zeigen bei Verformung, z.B. bei Kompression, zwar ein elastisches Verhalten, tendieren aber zu einer zeitlich verzögerten Rückstellung in ihre ursprüngliche Form, so daß sie während der erfindungsgemäßen Verarbeitung expandieren und dadurch ein erhöhter Kontaktdruck erzeugt wird.

Wie bereits angedeutet, wird bevorzugt das flüssige Medium mittels der hochfrequenten elektromagnetischen Strahlung unter Druckaufbau in dem Formraum zumindest teilweise verdampft, wobei insbesondere die Temperatur im Formraum durch den Druck des strahlungsabsorbierenden Mediums im Formraum gesteuert wird. Der Druck im Formraum kann vorzugsweise über den Dampfdruck des strahlungsabsorbierenden Mediums gesteuert und somit z.B. die der Siedetemperatur des Mediums bei dem jeweiligen Dampfdruck entsprechende Schweißtemperatur eingestellt werden. Hierbei kann der Druck im Formraum nach Erreichen der gewünschten Schweißtemperatur bei anhaltender Energiezufuhr durch Abführen von Medium, insbesondere Dampf, im wesentlichen konstant gehalten werden, um die der gewünschten Schweißtemperatur entsprechende Siedetemperatur des Mediums konstant zu halten und den Dampf nicht zu überhitzen. Je nach erforderlicher Schweißzeit kann der Druck im Formraum nach Erreichen der Schweißtemperatur und gegebenenfalls Halten dieser Temperatur durch Abführen von Medium (Dampf) reduziert werden, wobei der Druck entweder schlagartig oder durch einen negativen Druckgradienten gesteuert reduziert werden kann.

Das flüssige Medium kann entweder im wesentlichen vollständig oder auch nur teilweise verdampft werden, wobei das aus der Schüttung durch thermisches Verbinden der Partikel erhaltene Formteil insbesondere im letztgenannten Fall vorzugsweise mittels der elektromagnetischen Strahlung im wesentlichen drucklos oder durch Anlegen von Unterdruck am Formraum getrocknet wird.

Vorzugsweise wird der Formraum und/oder das Formteil temperiert, wobei der Formraum z.B. vor Prozeßbeginn erwärmt und nach dem Prozeß abgekühlt wird. Hierfür kommen sowohl gasförmige Medien, wie Druckluft, als auch Flüssigkeiten, z.B. Wasser, in Frage.

Gemäß einer Ausführungsvariante ist vorgesehen, daß wenigstens eine Trägerschicht, insbesondere aus wenigstens einem Polymer, in dem Formraum angeordnet und mit den Partikeln hinter- bzw. umschäumt wird. Alternativ oder zusätzlich ist vorgesehen, daß wenigstens eine Deckschicht, insbesondere aus wenigstens einem Polymer, z.B. einer Kunststoffolie, in dem Formraum angeordnet und mit den Partikeln hinterschäumt wird. Die Träger- und/oder die Deckschicht können an ihrer Verbindungsfläche mit den Partikeln beispielsweise mit wenigstens einer elektromagnetische Strahlung absorbierenden Substanz beschichtet werden, um eine innige Schweißverbindung zwischen den Partikeln und der Träger- bzw. Deckschicht sicherzustellen.

Eine bevorzugte Ausführung sieht vor, daß der Formraum von einem verschließbaren Formwerkzeug gebildet und die Partikelschüttung bei geschlossenem Formwerkzeug diskontinuierlich unter Bildung des Formteils verschweißt wird. Hierbei kann entweder ein für elektromagnetische Strahlung durchlässiges Formwerkzeug verwendet und dieses zum Verschweißen der Partikel in einem hochfrequenten elektromagnetischen Feld angeordnet oder alternativ ein für elektromagnetische Strahlung im wesentlichen undurchlässiges Formwerkzeug verwendet und zum Verschweißen der Partikel hochfrequente elektromagnetische Strahlung in das Formwerkzeug eingekoppelt werden.

Zur Vermeidung von Standzeiten werden vorzugsweise mehrere Formwerkzeuge in einer Karussellanordnung mit einer das hochfrequente elektromagnetische Feld aufweisenden Station geführt, so daß beispielsweise ein Formwerkzeug mit den Partikeln und dem flüssigen Medium befüllt werden kann, während ein anderes Formwerkzeug zum thermischen Verbinden der Partikel in dem hochfrequenten elektromagnetischen Feld angeordnet und ein weiteres Formwerkzeug mit dem aus der Schüttung erhaltenen Formteil gekühlt wird.

Eine weitere bevorzugte Ausführung sieht vor, daß der Formraum durch umlaufende Trägerbänder gebildet und die Partikelschüttung mittels der Trägerbänder kontinuierlich an wenigstens einer hochfrequenten elektromagnetischen Strahlungsquelle vorbeigeführt und unter Bildung eines im wesentlichen strangförmigen Formteils verschweißt wird, wobei die Partikelschüttung zweckmäßig zumindest während des Verschweißens als dichte Packung unter mechanischem Druck gehalten wird, um eine möglichst homogene Struktur des auf diese Weise erzeugten strangförmigen Formteils zu erzielen. Dies kann beispielsweise dadurch erfolgen, daß sich der Raum zwischen den Trägerbändern in Richtung der elektromagnetischen Strahlungsquelle verengt, oder daß mehrere, hintereinander geschaltete Trägerbänder vorgesehen sind, von denen die vorlaufenden mit einer höheren Geschwindigkeit als die nachlaufenden Trägerbänder umlaufen. Derartige Trägerbänder sind an sich aus der eingangs zitierten DE 198 29 562 bekannt. Das Profil des Formteils wird durch die Kontur der umlaufenden Trägerbänder bestimmt.

Eine andere bevorzugte Ausführung sieht vor, daß der Formraum von einem offenen Zylinder gebildet und die in den Zylinder von einer Seite mittels eines Verdrängers aufgegebene Partikelschüttung an wenigstens einer hochfrequenten elektromagnetischen Strahlungsquelle kontinuierlich vorbeitransportiert und unter Bildung eines im wesentlichen strangförmigen Formteils verschweißt wird. Der Transport kann dadurch erfolgen, daß der Zylinder das Gehäuse eines Extruders, einer Schnecken- oder Kolbenpresse od. dgl. bildet. Das Profil der aus der Schüttung kontinuierlich erhaltenen Formteile wird durch den Querschnitt des Zylinders festgelegt, wobei die Partikel mittels des Verdrängers insbesondere gegen eine Querschnittsverengung des Zylinders gefördert werden, um in dem dem Strahlungsfeld exponierten Formraum einen mechanischen Druckaufbau zu erzielen.

Die im wesentlichen strangförmigen Formteile können unter Bildung von Blöcken, Platten, Zylindern od. dgl. abgelängt werden.

Die Erfindung betrifft ferner eine Vorrichtung zum thermischen Verbinden von in einer Schüttung angeordneten Partikeln aus wenigstens einem geschäumten, vorgeschäumten und/oder schäumbaren Polymer zu einem Formteil mit einem die Partikel aufnehmenden Formraum mit einer Zuführleitung zum Fluten des Formraums mit einem strahlungsabsorbierenden Fluid und einer Abführleitung zum Entlüften und/oder Ableiten des Fluids und wenigstens einem hochfrequenten elektromagnetischen Strahlungsfeld, insbesondere zur Durchführung des vorstehend beschriebenen Verfahrens. Die erfindungsgemäße Vorrichtung ist dadurch gekennzeichnet, daß die Zuführleitung in den Formraum im Bereich dessen tiefster Stelle einmündet und der Formraum gegebenenfalls einen Überlauf für das Fluid während des Befüllens aufweist. Während der Überlauf dazu dient, während des Befüllens des Formraums mit dem strahlungsabsorbierenden Medium die im Formraum bzw. in der dem Formraum zuvor aufgegebenen Partikelschüttung eingeschlossene Luft durch das Medium vollständig zu verdrängen, dient die Abführleitung zum Ableiten des insbesondere in den Dampfzustand überführten Mediums während der Bestrahlung bzw. -im Falle eines Einsatzes von expandierbaren Polymerpartikeln mit nur teilweiser Ausfüllung ihres Hohlraumvolumens mit dem flüssigen Medium- zum Ableiten der Restluft aus der Partikelschüttung, während die Partikel bei der Bestrahlung expandieren und aufgrund ihrer Kompressibilität auf diese Weise das Hohlraumvolumen der Schüttung verringert wird, so daß das Hohlraumvolumen unter Verdrängen der Restluft vollständig mit dem flüssigen Medium ausgefüllt wird. Falls kein Überlauf vorgesehen ist, so übernimmt die Abführleitung zusätzlich die Funktion des Überlaufs. Da die Zuführleitung in den Formraum im Bereich dessen tiefster Stelle einmündet, ist ein steigendes Auffüllen einer in den Formraum eingebrachten Partikelschüttung unter im wesentlichen vollständigem Entweichen der eingeschlossenen Luft möglich.

In bevorzugter Ausführung setzt der Überlauf im Bereich der höchsten Stelle des Formraums an, um im Formraum eingeschlossene Restluft ableiten zu können. Zur Steuerung des Drucks im Formraum ist vorzugsweise eine mit dem Formraum in Verbindung stehende Drucksteuereinrichtung vorgesehen, die bevorzugt wenigstens ein mit dem Formraum in Verbindung stehendes Steuerventil aufweist.

In bevorzugter Ausführung ist die Zuführleitung mit einem Steuerventil ausgestattet und ist die Zuführleitung weiterhin bevorzugt an einen mit dem Formraum in Verbindung stehenden Druckerzeuger angeschlossen, so daß einerseits eine Drucksteuerung während des Prozesses über die Zuführleitung für das flüssige, strahlungsabsorbierende Medium erfolgen kann, andererseits das Medium beim Befüllen des Formraums in diesem unter Druck gesetzt werden kann. Um eine Drucksteuerung über die Abführleitung für das während der Bestrahlung insbesondere zumindest teilweise in den gasförmigen Zustand überführten strahlungsabsorbierenden Mediums zu gewährleisten, ist in weiterhin bevorzugter Ausführung vorgesehen, daß die Abführleitung mit einem Steuerventil ausgestattet ist. In diesem Fall ist in der Abführleitung zwischen dem Formraum und dem Drucksteuerventil vorzugsweise eine Flüssigkeitsvorlage, wie ein Siphon, angeordnet, welcher während des Betriebs ein Zurücksaugen von Luft und/oder Dampf in den Formraum zuverlässig verhindert.

Die Drucksteuereinrichtung steht vorzugsweise über einen zumindest einen Teil des Formraums begrenzenden porösen Bereich mit dem Formraum in Verbindung, wobei insbesondere die Abführleitung an mehrere, vorzugsweise jede der Formwände des Formraums angeschlossen ist, um ein gleichmäßiges Abführen des strahlungsabsorbierenden Mediums während der Bestrahlung zu gewährleisten und eine homogene Verteilung des Mediums in der Partikelschüttung und folglich eine homogene Temperaturverteilung sicherzustellen, die ein homogenes und gleichförmiges thermisches Verbinden der Partikel gewährleistet. Hierfür sind bevorzugt an dem den Formraum begrenzenden porösen Bereich um den Formraum verteilt angeordnete Kanäle zum Anschließen der Drucksteuereinrichtung bzw. der mit dieser ausgestatteten Abführleitung auf, wobei die Kanäle beispielsweise zu einer Ringleitung zusammengeschlossen sind, in die die Abführleitung mündet.

Eine bevorzugte Ausführung sieht vor, daß dem Formwerkzeug eine Förderschnecke zugeordnet ist, mittels der die Partikel zuführbar sind. Der Förderschnecke ist vorzugsweise eine Zugabeeinrichtung für das strahlungsabsorbierende Fluid zugeordnet, so daß die Partikel in diesem eindispergiert im Formraum zuführbar sind.

Eine bevorzugte Ausführung sieht vor, daß der Formraum aus einem Formwerkzeug gebildet ist, welches aus einem ortsfesten Werkzeugteil und einem insbesondere in dieses eintauchenden, beweglichen Werkzeugteil besteht, das in seiner einen Position den Formraum schließt und in seiner anderen Position das Einfüllen der Partikel gestattet. Das ortsfeste Werkzeugteil weist vorzugsweise Anschlüsse für die Zuführleitung und für die Abührleitung bzw. für die insbesondere an wenigstens eine der Leitungen angeschlossene Drucksteuereinrichtung auf. Je nach Anordnung des Formwerkzeugs kann der zweckmäßig im Bereich der höchsten Stelle des Formraums ansetzende Überlauf entweder im ortsfesten oder auch im beweglichen Werkzeugteil angeordnet sein. An dem ortsfesten Werkzeugteil kann außerhalb des Formraums, aber innerhalb des Fahrwegs des beweglichen Werkzeugteils eine von diesem überfahrbare Füllöffnung zum Einfüllen der Partikel angeordnet sein. Das bewegliche Werkzeugteil ist insbesondere linear, z.B. horizontal oder vertikal, verfahrbar.

Bevorzugt besteht das Formwerkzeug aus einem für hochfrequente elektromagnetische Strahlung zumindest teilweise durchlässigen Material, wobei es aus fertigungstechnischen Gründen und aus Kostengründen vorzugsweise aus einem den Formraum bildenden, strahlungsdurchlässigen, temperaturstabilen Kunststoff und einem gleichfalls strahlungsdurchlässigen, im wesentlichen die mechanischen Kräfte aufnehmenden Kunststoff besteht. Während der den Formraum bildende strahlungsdurchlässige Kunststoff insbesondere ein hochwertiger, thermisch stabiler Kunststoff ist, kann der die äußere Hülle des Formwerkzeugs bildende, den Formraum aufnehmende Kunststoff aus einem minderwertigeren Kunststoff bestehen. Letzterer dient vornehmlich zur Erhöhung der Stabilität des Formwerkzeugs. In bevorzugter Ausführung kann zumindest ein Teil der den Formraum begrenzenden Flächen des Formwerkzeugs mit einer bezüglich der Strahlung zumindest teilaktiven Beschichtung versehen sein, um eine ausreichende Erhitzung der Polymerpartikel an den den Formraum begrenzenden Flächen sicherzustellen und dem Formteil eine einwandfreie Oberfläche zu verleihen. Es kann z.B. ein in den Formraum einbringbares Inlay aus einem bezüglich hochfrequenter elektromagnetischer Strahlung zumindest teilaktiven Material vorgesehen sein.

Das Formwerkzeug kann auch aus einem für die Strahlung im wesentlichen undurchlässigen Material bestehen und die Strahlung in den Formraum einkoppelbar sein.

Um einerseits den Abkühlvorgang des Formteils nach dem thermischen Verbinden der Polymerpartikel zu beschleunigen, andererseits den Formraum vor Prozeßbeginn aufzuwärmen, ist das Formwerkzeug vorzugsweise mit den Formraum umgebenden Fluid-Kanälen zum Temperieren des Formwerkzeugs und/oder des Formteils versehen.

Zur Erhöhung der Effektivität der erfindungsgemäßen Vorrichtung sind bevorzugt mehrere Formwerkzeuge auf einer Transportstrecke an wenigstens einem hochfrequenten elektromagnetischen Strahlungsfeld nacheinander vorbeiführbar. Hierfür kann beispielsweise eine Karussellanordnung vorgesehen sein, bei der mehrere Formwerkzeuge auf einem Karussell mit wenigstens einer Füllstation, wenigstens einer Station mit dem Strahlungsfeld und wenigstens einer Entnahmestation für die Formteile angeordnet sind.

Um eine gleichmäßige und homogene Bestrahlung der Partikel sicherzustellen, kann vorgesehen sein, daß die Richtung des Strahlungsfelds bezüglich dem Formraum veränderbar ist, wobei z.B. der Formraum in dem Strahlungsfeld drehbar sein kann oder ein oder mehrere Strahlungsfelder bezüglich dem Formraum beweglich angeordnet sein können.

In bevorzugter Ausführung sind das hochfrequente elektromagnetische Strahlungsfeld und der Formraum zumindest während der Bestrahlung durch eine sie einschließende, für elektromagnetische Strahlung undurchlässige Wandung abgeschirmt.

Die hochfrequente elektromagnetische Strahlungsquelle ist insbesondere eine Mikrowellenstrahlungsquelle. Ihre Strahlungsintensität ist zweckmäßig regelbar.

Nachstehend ist die Erfindung anhand von Ausführungsbeispielen unter Bezugnahme auf die Zeichnungen näher erläutert. Es zeigen:
- Fig. 1: eine schematische Schnittansicht einer Ausführungsform eines Formwerkzeugs;
- Fig. 2: eine schematische Ansicht einer Karussellanordnung mit dem Formwerkzeug gemäß Fig.1;
- Fig. 3: eine schematische Schnittansicht einer Ausführungsform einer Vorrichtung zur diskontinuierlichen Durchführung des erfindungsgemäßen Verfahrens während des Befüllens des Formwerkzeugs;
- Fig. 4: die Vorrichtung gemäß Fig.3 während der Bestrahlung und
- Fig. 5: eine schematische Schnittansicht einer Ausführungsform einer Vorrichtung zur kontinuierlichen Durchführung des erfindungsgemäßen Verfahrens.

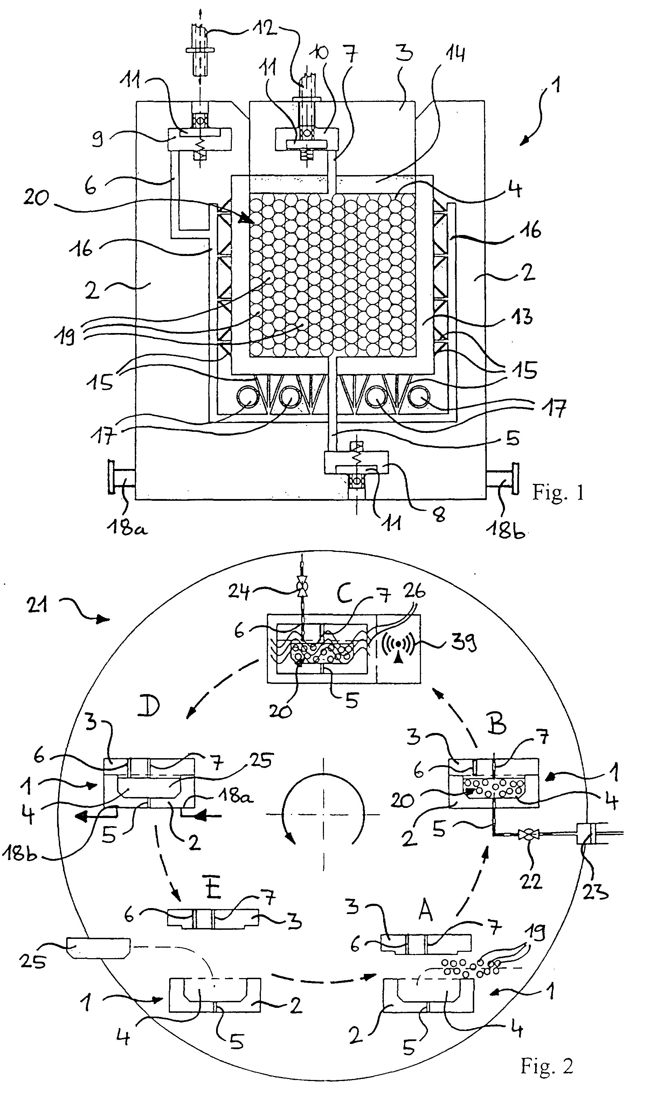

Das in Fig. 1 dargestellte Formwerkzeug 1 umfaßt ein ortsfestes Werkzeugteil 2 nach Art eines Unterwerkzeugs und ein bewegliches Werkzeugteil 3 nach Art eines Oberwerkzeugs, die einen mit einer Schüttung 20 von Polymerschaumpartikeln 19 befüllten Formraum 4 begrenzen. Das bewegliche Werkzeugteil 3 ist bezüglich dem ortsfesten Werkzeugteil 2 zwischen einer Position, die das Einfüllen der Partikel 19 gestattet (nicht gezeigt) und einer Position, in der es in das ortsfeste Werkzeugteil 2 eintaucht und den Formraum 4 verschließt (Fig.1) linear -in der gezeigten Ausführung horizontal- beweglich.

Der Formraum 4 weist eine Zuführleitung 5 zum Fluten des Formraums 4 mit einem strahlungsabsorbierenden Fluid und einen Überlauf 7 für das Fluid während des Befüllens auf, die jeweils in einen Anschluß 8, 10 mit einem Federventil 11 münden. Ferner ist eine in einen ebenfalls mit einem Federventil 11 ausgestatteten Anschluß 9 mündende Abführleitung 6 zum Entlüften und/oder Ableiten des insbesondere während der Bestrahlung in den dampfförmigen Zustand überführten Fluids vorgesehen. Die Federventile 11 der Anschlüsse 8, 9, 10 schließen diese durch Federkraft ab und öffnen sie beim Anschließen eines zugehörigen Anschlußstücks 12 automatisch.

Während die Zuführleitung 5 im Bereich der tiefsten Stelle und der Überlauf 7 im Bereich der höchsten Stelle des Formraums 4 ansetzt, ist die Abführleitung 6 über zu einer Ringleitung 16 zusammengeschlossene, um den Formraum 4 verteilt angeordnete Kanäle 15 mit dem Formraum 4 verbunden. In der gezeigten Ausführung sind die Kanäle 16 an sämtliche, den Formraum 4 begrenzende Formwände des ortsfesten Werkzeugteils 2 angeschlossen und stehen mit dem Formraum 4 über einen diesen begrenzenden porösen Bereich 13, der einerseits eine Diffusion zumindest des in den gasförmigen Zustand überführten strahlungsabsorbierende Mediums, andererseits eine einwandfreie Oberfläche eines gebildeten Formteils durch oberflächige Dampfzirkulation ermöglicht, in Verbindung. Das bewegliche Werkzeugteil 3 ist an seiner dem Formraum 4 zugewandten Seite mit einer bezüglich hochfrequenter elektromagnetischer Strahlung zumindest teilaktiven Beschichtung 14 beschichtet, die z.B. aus Phenol-, Epoxydharzen, Polyurethanen, Keramik oder dergleichen besteht. Während die Zuführleitung 5 und die Abführleitung 6 an dem ortsfesten Werkzeugteil 2 angeordnet sind, ist der Überlauf 7 in der gezeigten Ausführung an dem beweglichen Werkzeugteil 3 angeordnet.

Das Formwerkzeug 1 besteht insbesondere aus einem für hochfrequente elektromagnetische Strahlung zumindest teilweise durchlässigen Material, wobei der den Formraum 4 begrenzende poröse Bereich 13 des ortsfesten Werkzeugteils 2 beispielsweise aus einem hochwertigen, temperaturstabilen Kunststoff, z.B. Polytetrafluorehten (PTFE), und der den porösen Bereich 13 umgebende, die Leitungen 5, 6, 16 aufnehmende Bereich aus einem im wesentlichen die mechanischen Kräfte aufnehmenden, minderwertigeren Kunststoff besteht.

Das Formwerkzeug 1 - in der gezeigten Ausführung das ortsfeste Werkzeugteil 2 - weist ferner um den Formraum 4 verteilt angeordnete Fluid-Kanäle 17 zum Temperieren des Formwerkzeugs 1 bzw. des erhaltenen Formteils auf, welche über einen Einlaßstutzen 18a und einen Auslaßstutzen 18b mit einem gasförmigen (z.B. Druckluft) oder flüssigen (z.B. Wasser) Heiz- bzw. Kühlmedium beaufschlagbar sind.

Fig. 2 ist eine schematische Ansicht einer Karussellanordnung 21 mit dem Formwerkzeug 1 gemäß Fig. 1 entnehmbar. Hierbei sind mehrere Formwerkzeuge 1 auf einem Karussell mit einer Füllstation A zum Aufgeben der Polymerpartikel 19, einer Füllstation B zum Fluten des Formraums 4 mit einem flüssigen, strahlungsabsorbierenden Medium, einer Station C mit einem Strahlungsfeld 26 zum thermischen Verbinden der Polymerpartikel 19, einer Kühlstation D zum Kühlen des erhaltenen Formteils 25 sowie einer Entnahmestation E für das Formteil 25 angeordnet. Die Füllstation B ist mit einer Drucksteuereinrichtung ausgestattet, welche ein in einer Zuführleitung 5 für das flüssige, strahlungsabsorbierende Medium angeordnetes Steuerventil 22 und einem Druckerzeuger 23 aufweist. Mittels der Drucksteuereinrichtung ist der Druck im Formraum 4 und somit das Verhältnis von Polymerpartikeln 19 zu strahlungsabsorbierendem Medium während des Befüllens exakt einstellbar. Die Bestrahlungsstation C weist ebenfalls eine Drucksteuereinrichtung mit einem in der Abführleitung 6 angeordneten Drucksteuerventil 24 sowie eine Strahlungsquelle 39, z.B. eine Mikrbwellenstrahlungsquelle, auf. Das Steuerventil 24 dient zum Steuern des Drucks im Formraum während der Bestrahlung, z.B. durch geregeltes Ablassen des in die Dampfphase überführten strahlungsabsorbierenden Mediums.

Zur Durchführung des erfindungsgemäßen Verfahrens werden die Polymerpartikel 19, z.B. geschäumte Polymerpartikel 19 aus EPP, in der Füllstation A in das offene ortsfeste Werkzeugteil 2 des Formwerkzeugs 1 eingebracht und durch Schließen des Formwerkzeugs 1 mittels des beweglichen Werkzeugteils 3 mechanisch komprimiert. In der Füllstation B wird der Formraum 4 über die Zuführleitung 5 unter Verdrängen der in den Hohlräumen der Partikelschüttung 20 befindlichen Luft steigend mit einem flüssigen, elektromagnetische Strahlung absorbierenden Medium, z.B. Wasser, geflutet. Mittels des Steuerventils 22 und dem Druckerzeuger 23 der Drucksteuereinrichtung wird der gewünschte Druck im Formraum 4 eingestellt. Die von dem flüssigen Medium verdrängte Luft wird über den Überlauf 7 abgeführt; die mit dem den Formraum 4 umgebenden porösen Bereich des Formwerkzeugs 1 (Fig. 1) in Verbindung stehende Abführleitung wurde zuvor geschlossen. Nach Befüllen wird das z.B. aus PTFE bestehende Formwerkzeug 1 in der Bestrahlungsstation C in einem elektromagnetischen Strahlungsfeld 26 einer Strahlungsquelle 39 angeordnet, so daß die Polymerpartikel 19 eine homogene, innige und dauerhafte Schweißverbindung eingehen. Während der Bestrahlung wird der Druck im Formraum 4 mittels des in der Abführleitung 6 angeordneten Steuerventils 24 der Drucksteuereinrichtung eingestellt und gegebenenfalls die Richtung des Strahungsfelds 26 bezüglich dem Formwerkzeug 1 verändert, indem letzteres z.B. im Strahlungsfeld 26 gedreht wird. Das elektromagnetische Strahlung absorbierende Medium kann während der Bestrahlung teilweise oder auch zur Gänze verdampft und über das Steuerventil 24 aus dem Formraum 4 abgeführt werden. Wird das Medium nicht vollständig verdampft und aus dem Formraum 4 abgeführt, so ist beispielsweise eine drucklose Trocknung des erhaltenen Formteils mittels hochfrequenter elektromagnetischer Strahlung 26 bei geöffnetem Steuerventil 24 möglich. Alternativ kann eine Vakuumtrocknung vorgesehen sein. Nach der Bestrahlung wird das durch thermisches Verbinden der Partikel 19 erhaltene Formteil 25 in der Kühlstation D gekühlt, indem die Fluid-Kanäle des Formwerkzeugs 1 (Fig.1) über die Stutzen 18a, 18b mit einem Kühlmedium beaufschlagt werden. In der Entnahmestation E wird das Formwerkzeug 1 geöffnet und das Formteil 25 entnommen.

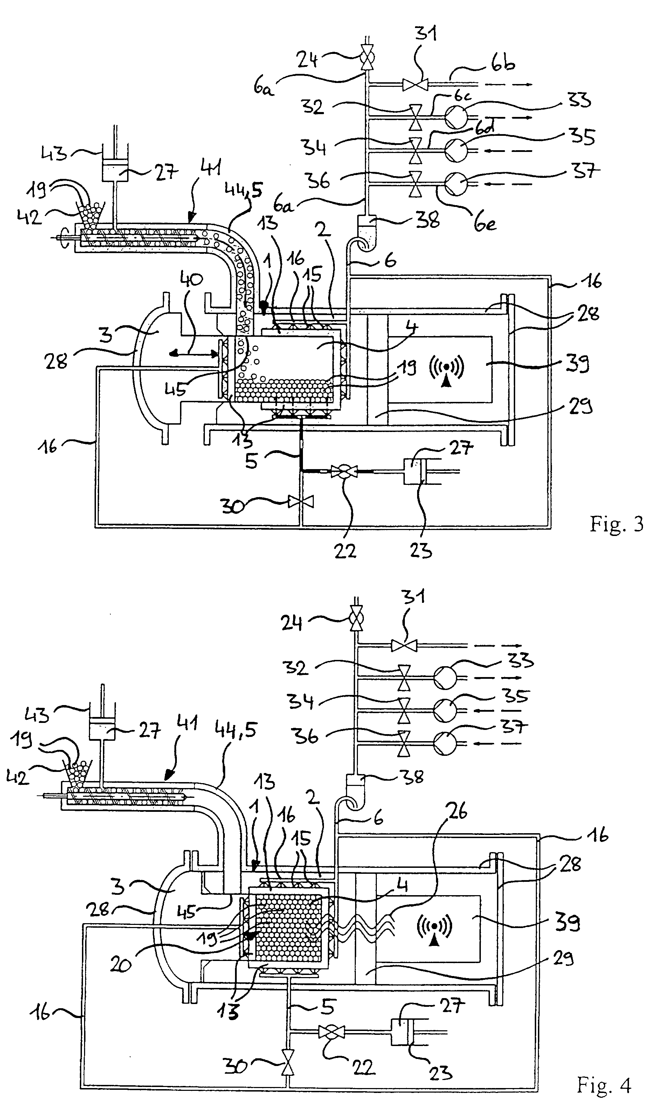

Fig.3 und 4 zeigen jeweils eine Vorrichtung zur diskontinuierlichen Durchführung des erfindungsgemäßen Verfahrens während des Befüllens eines Formraums 4 mit Polymerpartikeln 19 (Fig. 3) sowie beim thermischen Verbinden der Partikelschüttung 20 mittels hochfrequenter elektromagnetischer Strahlung 26 (Fig. 4). Die Vorrichtung weist ein Formwerkzeug 1 mit einem ortsfesten Werkzeugteil 2 und einem beweglichen Werkzeugteil 3 auf, wobei das bewegliche Werkzeugteil 3 linear horizontal verfahrbar ist (Pfeil 40). Das ortsfeste Werkzeugteil 2 weist einen den Formraum 4 umgebenden porösen Werkzeugbereich 13 auf, an dem verteilt angeordnete Kanäle 15 angeordnet sind, welche in eine Ringleitung 16 münden, an die eine Abführleitung 6 zum Abführen des z.B. während des Bestrahlens in den gasförmigen Zustand überführten strahlungsabsorbierenden Fluids angeschlossen ist. Die Abführleitung 6 ist über die Ringleitung 16 und die Kanäle 15 an die obere Formwand des Formraums 4 des ortsfesten Werkzeugteils 2 sowie an die sowohl von dem ortsfesten 2 als auch von dem beweglichen Werkzeugteil 3 gebildeten seitlichen Formwände des Formraums 4 angeschlossen. Die untere Formwand des Formraums 4 ist über die mit dem porösen Werkzeugbereich 13 in Verbindung stehenden Kanäle 15 mit einer Zuführleitung 5 für das strahlungsabsorbierende Fluid 27 verbunden. Das ortsfeste Werkzeugteil 2 weist ferner eine Füllöffnung 45 auf, welche von dem beweglichen Werkzeugteil 3 überfahrbar ist (Pfeil 40). In der in Fig. 3 dargestellten Position gibt das bewegliche Werkzeugteil 3 die Füllöffnung 45 frei, so daß die Partikel 19 über ein Füllrohr 44 in den Formraum 4 gelangen. In der in Fig. 4 gezeigten Position ist die Füllöffnung 45 durch Verfahren des beweglichen Werkzeugteils 3 unter mechanischem Komprimieren der Partikel 19 im Formraum 4 verschlossen. Entgegen der in Fig. 1 gezeigten Ausführungsform eines Formwerkzeugs weist das Formwerkzeug 1 der Vorrichtung gemäß Fig. 3 und 4 keinen mit dem Formraum 4 verbundenen Überlauf für das strahlungsabsorbierende Fluid auf. In diesem Fall dient die über den porösen Werkzeugbereich 13, die Kanäle 15 und die Ringleitung 16 mit dem Formraum 4 verbundene Abführleitung 6 z.B. zum vollständigen Abführen der Restluft beim Befüllen des Formraums 4 mit dem Fluid.

Dem Formwerkzeug 1 ist eine Strahlungsquelle 39 zum Erzeugen eines hochfrequenten elektromagnetischen Strahlungsfelds 26 zugeordnet, wobei sowohl das Formwerkzeug 1 als auch die Strahlungsquelle 39 von einer für elektromagnetische Strahlung undurchlässigen Wandung 28 abgeschirmt sind; zwischen der Strahlungsquelle 39 und dem Formwerkzeug 1 ist eine für die Strahlung 26 durchlässige Druckwand 29 angeordnet.

Zum Aufgeben der Polymerpartikel 19 ist eine Förderschnekke 41 mit einer Aufgabeeinrichtung 42 vorgesehen, welche über ein Füllrohr 44 mit der Aufgabeöffnung 45 des Formwerkzeugs 1 verbunden ist. Die Förderschnecke 41 weist in der gezeigten Ausführung eine Zugabeeinrichtung 43 für das strahlungsabsorbierende Fluid 27 auf, mittels der die Partikel 19 in das Fluid 27 eindispergiert dem Formraum 4 zuführbar sind. Alternativ oder zusätzlich ist der Formraum 4 über die Zuführleitung 5 steigend mit dem Fluid 27 flutbar, wobei in diesem Fall vorzugsweise eine Drucksteuereinrichtung mit einem Steuerventil 22 und einem Druckerzeuger 23 vorgesehen ist, um im Formraum 4 während des Befüllens den gewünschten Druck einzustellen. Die Zuführleitung 5 ist über ein Absperrventil 30 mit der Ringleitung 16 verbunden, so daß der Formraum 4 einerseits durch Schließen des Absperrventils 30 und Öffnen des Steuerventils 22 mit dem Fluid flutbar ist. Andererseits kann die Zuführleitung 5 durch Schließen des Steuerventils 22 und Öffnen des Absperrventils 30 (Fig. 2) zum Abführen des in den gasförmigen Zustand überführten Fluids während des thermischen Verbindens der Partikel 19 mittels hochfrequenter elektromagnetischer Strahlung 26 dienen (Fig. 4).

Die in die Ringleitung 16 mündende Abführleitung 6 weist an einem Abschnitt 6a wiederum eine Steuereinrichtung in Form eines Steuerventils 24 auf, um durch Zurückhalten oder gesteuertes oder schlagartiges Abführen des strahlungsabsorbierenden Fluids während des thermischen Verbindens den Innendruck in dem Formraum 4 und dadurch die gewünschte Schweißtemperatur einzustellen. Zwischen der Abführleitung 6 und dem Abschnitt 6a mit dem Steuerventil 24 ist eine Flüssigkeitsvorlage 38 in Form eines Siphons angeordnet, welche während des Betriebs (Fig. 4) ein Zurücksaugen von Luft in den Formraum 4 verhindert. In den zwischen der Flüssigkeitsvorlage 38 und dem Steuerventil 24 angeordneten Abschnitt 6a der Abführleitung 6 mündet eine Abzweigleitung 6b mit einem Entlüftungsventil 31, welches beispielsweise zum Abführen der im Formraum 4 beim Befüllen verdrängten Luft dient. An den Abschnitt 6a der Abführleitung 6 ist weiterhin eine Abzweigleitung 6c mit einem mit einer Vakuumpumpe 33 in Verbindung stehenden Vakuumventil 32 angeschlossen, um das durch thermisches Verbinden der Polymerpartikel 19 erhaltene Formteil entweder drucklos oder bei Unterdruck zu trocknen. Zum Temperieren des Formwerkzeugs 1 mit einem flüssigen (z.B. Wasser) oder gasförmigen Temperiermedium (z.B. Druckluft) ist ferner eine mit dem Abschnitt 6a verbundene Abzweigleitung 6d mit einem mit einer Flüssigkeitspumpe 35 in Verbindung stehenden Temperierflüssigkeitsventil und eine ebenfalls mit dem Abschnitt 6a verbundene Abzweigleitung 6e mit einem mit einer Gaspumpe 37 in Verbindung stehenden Temperiergasventil 36 vorgesehen.

Die gezeigte Vorrichtung ermöglicht aufgrund der Zugabeeinrichtung 43 sowohl ein Aufgeben von in das strahlungsabsorbierende Fluid 27 eindispergierten Partikeln 19 als auch aufgrund der Zuführleitung 5 ein steigendes Fluten des Formraums 4, wobei der Druck im Formraum 4 während des Befüllens über das Steuerventil 22 und den Druckerzeuger 23 der Drucksteuereinrichtung einstellbar ist (Fig. 3). Während der Bestrahlung (Fig. 4) kann der Druck im Formraum mittels des in der Abführleitung 6 angeordneten Steuerventils 24 geregelt werden, wobei die Zuführleitung 5 während der Bestrahlung durch Schließen des Steuerventils 22 und Öffnen des Absperrventils 30 über die Ringleitung 16 mit der Abführleitung 6 verbunden werden kann, so daß sie ebenfalls zum Abführen des Mediums 27 dient.

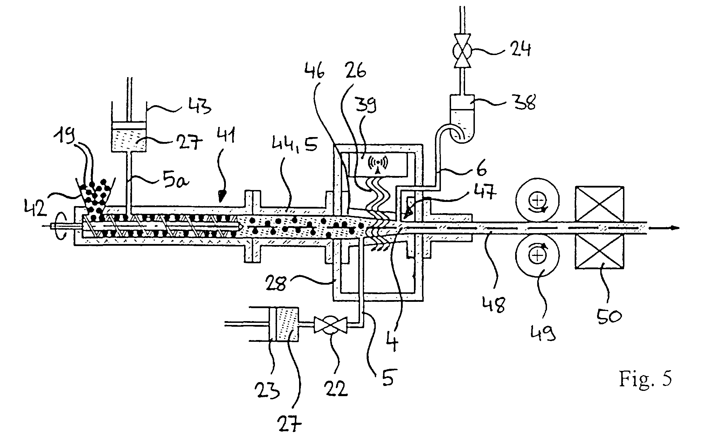

Fig. 5 zeigt eine Vorrichtung zur kontinuierlichen Durchführung des erfindungsgemäßen Verfahrens. Die Vorrichtung weist einen Verdränger in Form einer Förderschnecke 41 nach Art eines Extruders mit einer Aufgabeeinrichtung 42 zum Aufgeben der Polymerpartikel 19 auf. Die Förderschnecke 41 ist mit einer Zugabeeinrichtung 43 für das strahlungsabsorbierende Fluid 27 ausgestattet, um die Partikel 19 in das Fluid 27 einzudispergieren. Die Förderschnecke 41 mündet über ein als Zuführleitung 5 dienendes Füllrohr 44 in den eigentlichen Formraum 4, der von einem Zylinder 46 mit einer Querschnittsverengung 47 zur mechanischen Verdichtung der Partikel 19 gebildet ist. Den Zylinder 46 umgebend ist eine elektrische Strahlungsquelle 39 angeordnet, die z.B. ringförmig ausgebildet sein kann (nicht dargestellt), um die Richtung des von der Strahlungsquelle 39 erzeugten elektromagnetischen Strahlungsfeld 26 bezüglich dem Formraum 4 zu verändern und/oder den Formraum 4 um den gesamten Umfang des Zylinders 46 zu bestrahlen. Der Zylinder 48 und die Strahlungsquelle 39 sind von einer sie einschließenden, strahlungsundurchlässigen Wandung 28 von der Umgebung abgeschirmt.

Zur Steuerung des Drucks im Formraum 4 ist eine mit dem Formraum 4 über eine Zuführleitung 5 in Verbindung stehende Drucksteuereinrichtung mit einem Druckerzeuger 23 und einem Steuerventil 22 vorgesehen, mittels dessen z.B. das Massenverhältnis zwischen den kompressiblen Polymerpartikeln 19 und dem strahlungsabsorbierenden Fluid 27 durch Druckbeaufschlagen des Formraums 4 mit dem strahlungabsorbierenden Fluid 27 eingestellt werden kann. Alternativ oder zusätzlich kann die die Zugabeeinrichtung 43 mit der Förderschnecke 41 verbindende Zuführleitung 5a mit einem Steuerventil (nicht gezeigt) ausgestattet werden und zum Einstellen des gewünschten Drucks bzw. des Massenverhältnisses zwischen Partikel 19 und Fluid 27 dienen.

In den Formraum 4 mündet weiterhin eine Abführleitung 6, welche über eine Flüssigkeitsvorlage 38 mit einem Steuerventil 24 verbunden ist. Letzteres dient ebenfalls zur Steuerung des Drucks im Formraum 4 durch geregeltes Ablassen des bei der Bestrahlung in den gasförmigen Zustand überführten Fluids 27.

Mit Abstand vom Formraum 4 ist eine Transporteinrichtung 49 in Form von Rollen und eine hieran anschließende Kühl- und Trocknungseinrichtung 50 angeordnet, um das durch thermisches Verbinden der Polymerpartikel 19 erzeugte strangförmige Formteil 48 kontinuierlich weiterzutransportieren und währenddessen vollständig zu trocknen. Das getrocknete Formteil 48 kann anschließend einer Trenneinrichtung (nicht gezeigt) zum Ablängen desselben unter Bildung von Blöcken, Platten, Zylindern oder dergleichen zuführbar sein.

Anstelle des Zylinders 46 können auch umlaufende Trägerbänder vorgesehen sein, zwischen denen die in das strahlungsabsorbierende Medium 27 eindispergierten Partikel 19 kontinuierlich an der hochfrequenten elektromagnetischen Strahlungsquelle 39 vorbeigeführt werden.

### Bezugszeichenliste

- 1: Formwerkzeug
- 2: ortsfestes Werkzeugteil
- 3: bewegliches Werkzeugteil
- 4: Formraum
- 5,5a: Zuführleitung
- 6,6a: Abführleitung
- 6b,6c,6d,6e: Abzweigleitung
- 7: Überlauf
- 8: Anschluß
- 9: Anschluß
- 10: Anschluß
- 11: Federventil
- 12: Anschlußstück
- 13: poröser Werkzeugbereich
- 14: teilaktive Beschichtung
- 15: verteilt angeordnete Kanäle
- 16: Ringleitung
- 17: Fluid-Kanal
- 18a: Einlaßstutzen
- 18b: Auslaßstutzen
- 19: Polymerpartikel
- 20: Partikelschüttung
- 21: Karussellanordnung
- 22: Steuerventil Zuführleitung
- 23: Druckerzeuger
- 24: Steuerventil Abführleitung
- 25: Formteil
- 26: hochfrequente elektromagnetische Strahlung
- 27: strahlungsabsorbierendes Medium
- 28: strahlungsundurchlässige Wandung
- 29: Druckwand
- 30: Absperrventil
- 31: Entlüftungsventil
- 32: Vakuumventil
- 33: Vakuumpumpe
- 34: Temperierflüssigkeitsventil
- 35: Flüssigkeitspumpe
- 36: Temperiergasventil
- 37: Gaspumpe
- 38: Flüssigkeitsvorlage
- 39: Strahlungsquelle
- 40: Fahrweg
- 41: Förderschnecke
- 42: Aufgabeeinrichtung
- 43: Zugabeeinrichtung
- 44: Füllrohr
- 45: Füllöffnung
- 46: Zylinder
- 47: Querschnittsverengung
- 48: strangförmiges Formteil
- 49: Transporteinrichtung
- 50: Kühl- und Trocknungseinrichtung

- A: Füllstation
- B: Füllstation
- C: Bestrahlungsstation
- D: Kühlstation
- E: Entnahmestation

## Patentansprüche

1. Verfahren zum thermischen Verbinden von in einer Schüttung angeordneten Partikeln aus wenigstens einem geschäumten, vorgeschäumten und/oder schäumbaren Polymer zu Formteilen mittels hochfrequenter elektromagnetischer Strahlung, indem die Partikel bei Anwesenheit eines elektromagnetische Strahlung absorbierenden, flüssigen Mediums unter Kontakt ihrer Grenzflächen und Einwirken der Strahlung zumindest oberflächig miteinander zu dem Formteil verschmolzen werden und dieses anschließend abgekühlt wird, **dadurch gekennzeichnet, daß** das Hohlraumvolumen der Schüttung vor oder während der Bestrahlung im wesentlichen vollständig mit dem flüssigen Medium ausgefüllt wird.

2. Verfahren nach Anspruch 1, **dadurch gekennzeichnet, daß** hochfrequente elektromagnetische Strahlung in einem Frequenzbereich zwischen 100 MHz und 10 GHz (Mikrowellenstrahlung) verwendet wird.

3. Verfahren nach Anspruch 1 oder 2, **dadurch gekennzeichnet, daß** geschäumte Polymerpartikel aus expandierbaren Polymeren eingesetzt werden.

4. Verfahren nach einem der Ansprüche 1 bis 3, **dadurch gekennzeichnet, daß** die Partikelschüttung in einem Formraum eingeschlossen wird.

5. Verfahren nach Anspruch 4, **dadurch gekennzeichnet, daß** die Partikel in loser Schüttung in den Formraum aufgegeben werden.

6. Verfahren nach einem der Ansprüche 1 bis 5, **dadurch gekennzeichnet, daß** die Schüttung in dem Formraum kompaktiert wird.

7. Verfahren nach einem der Ansprüche 1 bis 6, **dadurch gekennzeichnet, daß** das Massenverhältnis der Partikel zu dem flüssigen Medium durch den Druck in dem Formraum vor und/oder nach dem Auffüllen der Partikel gesteuert wird.

8. Verfahren nach einem der Ansprüche 1 bis 7, **dadurch gekennzeichnet, daß** die Partikel in den Formraum aufgegeben werden und das flüssige Medium unter Verdrängen der in der Partikelschüttung befindlichen Luft in den Formraum eingespeist wird.

9. Verfahren nach einem der Ansprüche 1 bis 8 **dadurch gekennzeichnet, daß** das flüssige Medium in den Formraum steigend eingespeist wird.

10. Verfahren nach einem der Ansprüche 1 bis 9, **dadurch gekennzeichnet, daß** die Partikelschüttung in dem Formraum mechanisch komprimiert und das flüssige Medium anschließend in den Formraum eingespeist wird.

11. Verfahren nach einem der Ansprüche 1 bis 10, **dadurch gekennzeichnet, daß** zumindest ein Teil der Partikel in das flüssige Medium eindispergiert und die Dispersion in den Formraum aufgegeben wird.

12. Verfahren nach Anspruch 11, **dadurch gekennzeichnet, daß** die Dispersion unter Druck in den Formraum aufgegeben wird.

13. Verfahren nach Anspruch 11 oder 12, **dadurch gekennzeichnet, daß** die Dispersion mittels eines Schnecken- oder Kolbenverdrängers in den Formraum aufgegeben wird.

14. Verfahren nach einem der Ansprüche 1 bis 7, **dadurch gekennzeichnet, daß** das flüssige Medium in den Formraum eingespeist wird und die Partikel unter Verdrängen des flüssigen Mediums in den Formraum aufgegeben werden.

15. Verfahren nach Anspruch 14, **dadurch gekennzeichnet, daß** das flüssige Medium in dem Formraum unter Druck gesetzt wird und die Partikel mit höherem Druck aufgegeben werden.

16. Verfahren nach einem der Ansprüche 1 bis 15, **dadurch gekennzeichnet, daß** das flüssige Medium mittels der hochfrequenten elektromagnetischen Strahlung unter Druckaufbau in dem Formraum zumindest teilweise verdampft wird.

17. Verfahren nach einem der Ansprüche 1 bis 16, **dadurch gekennzeichnet, daß** die Temperatur im Formraum durch den Druck des strahlungsabsorbierenden Mediums gesteuert wird.

18. Verfahren nach Anspruch 17, **dadurch gekennzeichnet, daß** der Druck im Formraum über den Dampfdruck des strahlungsabsorbierenden Mediums gesteuert wird.

19. Verfahren nach Anspruch 17 oder 18, **dadurch gekennzeichnet, daß** der Druck im Formraum nach Erreichen der gewünschten Schweißtemperatur durch Abführen von Medium im wesentlichen konstant gehalten wird.

20. Verfahren nach einem der Ansprüche 17 bis 19, **dadurch gekennzeichnet, daß** der Druck im Formraum nach Erreichen der Schweißtemperatur und gegebenenfalls Halten dieser Temperatur durch Abführen von Medium reduziert wird.

21. Verfahren nach Anspruch 20, **dadurch gekennzeichnet, daß** der Druck im Formraum schlagartig reduziert wird.

22. Verfahren nach einem der Ansprüche 1 bis 21, **dadurch gekennzeichnet, daß** das durch thermisches Verbinden der Partikel erhaltene Formteil mittels der elektromagnetischen Strahlung im wesentlichen drucklos getrocknet wird.

23. Verfahren nach einem der Ansprüche 1 bis 21, **dadurch gekennzeichnet, daß** das Formteil durch Anlegen von Unterdruck am Formraum getrocknet wird.

24. Verfahren nach einem der Ansprüche 1 bis 23, **dadurch gekennzeichnet, daß** der Formraum und/oder das Formteil temperiert wird.

25. Verfahren nach einem der Ansprüche 1 bis 24, **dadurch gekennzeichnet, daß** wenigstens eine Trägerschicht, insbesondere aus wenigstens einem Polymer, in dem Formraum angeordnet und mit den Partikeln hinter- bzw. umschäumt wird.

26. Verfahren nach einem der Ansprüche 1 bis 25, **dadurch gekennzeichnet, daß** wenigstens eine Deckschicht, insbesondere aus wenigstens einem Polymer, in dem Formraum angeordnet und mit den Partikeln hinterschäumt wird.

27. Verfahren nach Anspruch 25 oder 26, **dadurch gekennzeichnet, daß** die Träger- und/oder die Deckschicht an ihrer Verbindungsfläche mit den Partikeln mit wenigstens einer strahlungsabsorbierenden Substanz beschichtet wird.

28. Verfahren nach einem der Ansprüche 1 bis 27, **dadurch gekennzeichnet, daß** der Formraum von einem verschließbaren Formwerkzeug gebildet und die Partikelschüttung bei geschlossenem Formwerkzeug diskontinuierlich unter Bildung des Formteils verschweißt wird.

29. Verfahren nach Anspruch 28, **dadurch gekennzeichnet, daß** mehrere Formwerkzeuge in einer Karussellanordnung mit einer das hochfrequente elektromagnetische Feld aufweisenden Station geführt werden.

30. Verfahren nach einem der Ansprüche 1 bis 27, **dadurch gekennzeichnet, daß** der Formraum zwischen umlaufenden Trägerbändern gebildet und die Partikelschüttung mittels der Trägerbänder kontinuierlich an wenigstens einer hochfrequenten elektromagnetischen Strahlungsquelle vorbeigeführt und unter Bildung eines im wesentlichen strangförmigen Formteils verschweißt wird.

31. Verfahren nach einem der Ansprüche 1 bis 27, **dadurch gekennzeichnet, daß** der Formraum von einem offenen Zylinder gebildet und die in den Zylinder von einer Seite mittels eines Verdrängers aufgegebene Partikelschüttung an wenigstens einer hochfrequenten elektromagnetischen Strahlungsquelle kontinuierlich vorbeitransportiert und unter Bildung eines im wesentlichen strangförmigen Formteils verschweißt wird.

32. Verfahren nach Anspruch 31, **dadurch gekennzeichnet, daß** die Partikel mittels des Verdrängers gegen eine Querschnittsverengung des Zylinders gefördert werden.

33. Verfahren nach einem der Ansprüche 30 bis 32, **dadurch gekennzeichnet, daß** die im wesentlichen strangförmigen Formteile unter Bildung von Blöcken, Platten, Zylindern oder dergleichen abgelängt werden.

34. Vorrichtung zum thermischen Verbinden von in einer Schüttung (20) angeordneten Partikeln (19) aus wenigstens einem geschäumten, vorgeschäumten und/oder schäumbaren Polymer zu einem Formteil (25, 48) mit einem die Partikel (19) aufnehmenden Formraum (4) mit einer Zuführleitung (5) zum Fluten des Formraums (4) mit einem strahlungsabsorbierenden Fluid (27) und einer Abführleitung (6) zum Entlüften und/oder Ableiten des Fluids (27) und wenigstens einem hochfrequenten elektromagnetischen Strahlungsfeld (26), insbesondere zur Durchführung des Verfahrens nach einem der Ansprüche 1 bis 33, **dadurch gekennzeichnet, daß** die Zuführleitung (5) in den Formraum (4) im Bereich dessen tiefster Stelle einmündet und der Formraum (4) gegebenenfalls einen Überlauf (7) für das Fluid (27) während des Befüllens aufweist.

35. Vorrichtung nach Anspruch 34, **dadurch gekennzeichnet, daß** der Überlauf (7) im Bereich der höchsten Stelle des Formraums (4) ansetzt.

36. Vorrichtung nach Anspruch 34 oder 35, **gekennzeichnet durch** eine mit dem Formraum (4) in Verbindung stehende Drucksteuereinrichtung zur Steuerung des Drucks im Formraum (4).

37. Vorrichtung nach Anspruch 36, **dadurch gekennzeichnet, daß** die Drucksteuereinrichtung wenigstens ein mit dem Formraum (4) in Verbindung stehendes Steuerventil (22, 24) aufweist.

38. Vorrichtung nach Anspruch 36 oder 37, **dadurch gekennzeichnet, daß** die Zuführleitung (5) mit einem Steuerventil (22) ausgestattet ist.

39. Vorrichtung nach einem der Ansprüche 36 bis 38, **dadurch gekennzeichnet, daß** die Zuführleitung (5) an einen mit dem Formraum (4) in Verbindung stehenden Druckerzeuger (23) angeschlossen ist.

40. Vorrichtung nach einem der Ansprüche 36 bis 39, **dadurch gekennzeichnet, daß** die Abführleitung (6) mit einem Steuerventil (24) ausgestattet ist.

41. Vorrichtung nach Anspruch 40, **dadurch gekennzeichnet, daß** in der Abführleitung (6) zwischen dem Formraum (4) und dem Steuerventil (24) eine Flüssigkeitsvorlage (38), wie ein Siphon, angeordnet ist.

42. Vorrichtung nach einem der Ansprüche 36 bis 41, **dadurch gekennzeichnet, daß** die Drucksteuereinrichtung über einen zumindest einen Teil des Formraums (4) begrenzenden porösen Bereich (13) mit dem Formraum (4) in Verbindung steht.

43. Vorrichtung nach einem der Ansprüche 36 bis 42, **dadurch gekennzeichnet, daß** die Abführleitung (6) an mehrere Formwände des Formraums (4) angeschlossen ist.

44. Vorrichtung nach Anspruch 42 oder 43, **dadurch gekennzeichnet, daß** an dem den Formraum (4) begrenzenden porösen Bereich (13) um den Formraum (4) verteilt angeordnete Kanäle (15) zum Anschließen der Drucksteuereinrichtung angeordnet sind.

45. Vorrichtung nach Anspruch 44, **dadurch gekennzeichnet, daß** die Kanäle (15) zu einer Ringleitung (16) zusammengeschlossen sind.

46. Vorrichtung nach einem der Ansprüche 34 bis 45, **dadurch gekennzeichnet, daß** dem Formraum (4) eine Förderschnekke (41) zugeordnet ist, mittels der die Partikel (19) zuführbar sind.

47. Vorrichtung nach Anspruch 46, **dadurch gekennzeichnet, daß** der Förderschnecke (41) eine Zugabeeinrichtung (43) für das strahlungsabsorbierende Fluid (27) zugeordnet ist und die Partikel (19) in diesem dispergiert dem Formraum (4) zuführbar sind.

48. Vorrichtung nach einem der Ansprüche 34 bis 47, **dadurch gekennzeichnet, daß** der Formraum (4) von einem Formwerkzeug (1) gebildet ist, welches aus einem ortsfesten Werkzeugteil (2) und einem beweglichen Werkzeugteil (3) besteht, das in seiner einen Position den Formraum (4) schließt, in seiner anderen Position das Einfüllen der Partikel (19) gestattet.

49. Vorrichtung nach Anspruch 48, **dadurch gekennzeichnet, daß** das bewegliche Werkzeugteil (2) in das ortsfeste Werkzeugteil (5) eintaucht.

50. Vorrichtung nach Anspruch 48 oder 49, **dadurch gekennzeichnet, daß** das ortsfeste Werkzeugteil (2) Anschlüsse (8, 9) für die Zuführleitung (5) und für die Abführleitung (6) aufweist.

51. Vorrichtung nach einem der Ansprüche 48 bis 50, **dadurch gekennzeichnet, daß** an dem ortsfesten Werkzeugteil (2) außerhalb des Formraums (4), aber innerhalb des Fahrwegs (40) des beweglichen Werkzeugteils (3) eine von diesem überfahrbare Füllöffnung (45) zum Einfüllen der Partikel (19) angeordnet ist.

52. Vorrichtung nach einem der Ansprüche 48 bis 51, **dadurch gekennzeichnet, daß** das bewegliche Werkzeugteil (3) linear verfahrbar ist.

53. Vorrichtung nach einem der Ansprüche 48 bis 52, **dadurch gekennzeichnet daß** das Formwerkzeug (1) aus einem für hochfrequente elektromagnetische Strahlung (26) zumindest teilweise durchlässigen Material besteht.

54. Vorrichtung nach einem der Ansprüche 48 bis 53, **dadurch gekennzeichnet, daß** das Formwerkzeug (1) aus einem den Formraum (4) bildenden, strahlungsdurchlässigen, temperaturstabilen Kunststoff und einem gleichfalls strahlungsdurchlässigen, im wesentlichen die mechanischen Kräfte aufnehmenden Kunststoff besteht.

55. Vorrichtung nach einem der Ansprüche 48 bis 54, **dadurch gekennzeichnet daß** zumindest ein Teil der den Formraum (4) begrenzenden Flächen des Formwerkzeugs (1) mit einer bezüglich der Strahlung zumindest teilaktiven Beschichtung versehen sind.

56. Vorrichtung nach Anspruch 55, **dadurch gekennzeichnet daß** ein in den Formraum (4) einbringbares Inlay aus dem teilaktiven Material vorgesehen ist.

57. Vorrichtung nach einem der Ansprüche 48 bis 52, **dadurch gekennzeichnet, daß** das Formwerkzeug (1) aus einem für die Strahlung (26) im wesentlichen undurchlässigen Material besteht und die Strahlung (26) in den Formraum (4) einkoppelbar ist.

58. Vorrichtung nach einem der Ansprüche 48 bis 57, **dadurch gekennzeichnet, daß** das Formwerkzeug (1) den Formraum (4) umgebende Fluid-Kanäle (17) zum Temperieren des Formwerkzeugs (1) und/oder der Formteile 25, 48) aufweist.

59. Vorrichtung nach einem der Ansprüche 48 bis 58, **dadurch gekennzeichnet, daß** mehrere Formwerkzeuge (1) auf einer Transportstrecke an wenigstens einem hochfrequenten elektromagnetischen Strahlungsfeld (26) nacheinander vorbeiführbar sind.

60. Vorrichtung nach Anspruch 59, **dadurch gekennzeichnet, daß** mehrere Formwerkzeuge (1) auf einem Karussell mit wenigstens einer Füllstation (A, B), wenigstens einer Station (C) mit dem Strahlungsfeld (26) und wenigstens einer Entnahmestation (E) für die Formteile (25) angeordnet sind.

61. Vorrichtung nach einem der Ansprüche 34 bis 60, **dadurch gekennzeichnet, daß** die Richtung des Strahlungsfelds (26) bezüglich dem Formraum (4) veränderbar ist.

62. Vorrichtung nach einem der Ansprüche 34 bis 61, **dadurch gekennzeichnet, daß** das hochfrequente elektromagnetische Strahlungsfeld (26) und der Formraum (4) zumindest während der Bestrahlung durch eine sie einschließende, für elektromagnetische Strahlung (26) undurchlässige Wandung (28) abgeschirmt sind.

63. Vorrichtung nach einem der Ansprüche 34 bis 62, **dadurch gekennzeichnet, daß** das hochfrequente elektromagnetische Strahlungsfeld (26) ein Mikrowellenfeld ist.

## Claims

1. Method for thermally bonding particles which are disposed in a charge and are made of at least one foamed, prefoamed and/or foamable polymer to form moulded articles by means of high frequency electromagnetic radiation, in that the particles are melted together at least on the surface to form the moulded article, in the presence of a liquid medium which absorbs electromagnetic radiation, with contact of their boundary surfaces and the effect of the radiation, and said moulded article is subsequently cooled, **characterised in that** the cavity volume of the charge before or during the irradiation is substantially completely filled with the liquid medium.

2. Method according to claim 1, **characterised in that** high frequency electromagnetic radiation in a frequency range between 100 MHz and 10 GHz (microwave radiation) is used.

3. Method according to claim 1 or 2, **characterised in that** foamed polymer particles made of expandable polymers are used.

4. Method according to one of the claims 1 to 3, **characterised in that** the particle charge is enclosed in a mould cavity.

5. Method according to claim 4, **characterised in that** the particles are fed into the mould cavity in a loose charge.

6. Method according to one of the claims 1 to 5, **characterised in that** the charge is compacted in the mould cavity.

7. Method according to one of the claims 1 to 6, **characterised in that** the mass ratio of the particles to the liquid medium is controlled by means of the pressure in the mould cavity before and/or after filling of the particles.

8. Method according to one of the claims 1 to 7, **characterised in that** the particles are fed into the mould cavity and the liquid medium is fed into the mould cavity with displacement of the air which is situated in the particle charge.

9. Method according to one of the claims 1 to 8, **characterised in that** the liquid medium is fed ascending into the mould cavity.

10. Method according to one of the claims 1 to 9, **characterised in that** the particle charge is mechanically compressed in the mould cavity and the liquid medium is subsequently fed into the mould cavity.

11. Method according to one of the claims 1 to 10, **characterised in that** at least a part of the particles is dispersed into the liquid medium and the dispersion is fed into the mould cavity.

12. Method according to claim 11, **characterised in that** the dispersion is fed into the mould cavity under pressure.

13. Method according to claim 11 or 12, **characterised in that** the dispersion is fed into the mould cavity by means of a screw- or piston displacer.

14. Method according to one of the claims 1 to 7, **characterised in that** the liquid medium is fed into the mould cavity and the particles are fed into the mould cavity with displacement of the liquid medium.

15. Method according to claim 14, **characterised in that** the liquid medium is placed in the mould cavity under pressure and the particles are fed in with higher pressure.

16. Method according to one of the claims 1 to 15, **characterised in that** the liquid medium is at least partially vaporised by means of the high frequency electromagnetic radiation with pressure build-up in the mould cavity.

17. Method according to one of the claims 1 to 16, **characterised in that** the temperature in the mould cavity is controlled by means of the pressure of the radiation-absorbing medium.

18. Method according to claim 17, **characterised in that** the pressure in the mould cavity is controlled via the vapour pressure of the radiation-absorbing medium.

19. Method according to claim 17 or 18, **characterised in that** the pressure in the mould cavity, after reaching the desired welding temperature, is maintained substantially constant by withdrawal of medium.

20. Method according to one of the claims 17 to 19, **characterised in that** the pressure in the mould cavity, after reaching the welding temperature and if necessary holding this temperature, is reduced by withdrawal of medium.

21. Method according to claim 20, **characterised in that** the pressure in the mould cavity is reduced in an abrupt manner.

22. Method according to one of the claims 1 to 21, **characterised in that** the moulded article which is obtained by means of thermal bonding of the particles is dried in a substantially pressure-less manner by means of the electromagnetic radiation.

23. Method according to one of the claims 1 to 21, **characterised in that** the moulded article is dried by means of application of reduced pressure to the mould cavity.

24. Method according to one of the claims 1 to 23, **characterised in that** the mould cavity and/or the moulded article is temperature-controlled.

25. Method according to one of the claims 1 to 24, **characterised in that** at least one carrier layer, in particular made of at least one polymer, is disposed in the mould cavity and foamed behind or around with the particles.

26. Method according to one of the claims 1 to 25, **characterised in that** at least one cover layer, in particular made of at least one polymer, is disposed in the mould cavity and foamed behind with the particles.

27. Method according to claim 25 or 26, **characterised in that** the carrier and/or the cover layer is coated on its bonding face with the particles with at least one radiation-absorbing substance.

28. Method according to one of the claims 1 to 27, **characterised in that** the mould cavity is formed by a closeable form tool and the particle charge is welded discontinuously in the case of a closed form tool with formation of the moulded article.

29. Method according to claim 28, **characterised in that** a plurality of form tools is guided in a carousel arrangement with a station which has the high frequency electromagnetic field.

30. Method according to one of the claims 1 to 27, **characterised in that** the mould cavity is formed between revolving carrier belts and the particle charge is guided continuously past at least one high frequency electromagnetic radiation source by means of the carrier belts and is welded with formation of a substantially billet-shaped moulded article.

31. Method according to one of the claims 1 to 27, **characterised in that** the mould cavity is formed by an open cylinder and the particle charge, which is fed into the cylinder from one side by means of a displacer, is transported continuously past at least one high frequency electromagnetic radiation source and is welded with formation of a substantially billet-shaped moulded article.

32. Method according to claim 31, **characterised in that** the particles are conveyed by means of the displacer towards a cross-sectional tapering of the cylinder.

33. Method according to one of the claims 30 to 32, **characterised in that** the substantially billet-shaped moulded articles are cut to length with formation of blocks, plates, cylinders or the like.

34. Device for thermally bonding particles (19) which are disposed in a charge (20) and are made of at least one foamed, prefoamed and/or foamable polymer to form a moulded article (25, 48), having a mould cavity (4) receiving the particles (19), a supply line (5) for flooding the mould cavity (4) with a radiation-absorbing liquid (27) and a discharge line (6) for venting and/or withdrawing the liquid (27) and at least one high frequency electromagnetic radiation field (26), in particular for implementing the method according to one of the claims 1 to 33, **characterised in that** the supply line (5) discharges into the mould cavity (4) in the region of the deepest position thereof and the mould cavity (4) has if necessary an overflow (7) for the liquid (27) during filling.

35. Device according to claim 34, **characterised in that** the overflow (7) is attached in the region of the highest position of the mould cavity (4).

36. Device according to claim 34 or 35, **characterised by** a pressure control mechanism which is in communication with the mould cavity (4) for controlling the pressure in the mould cavity (4).

37. Device according to claim 36, **characterised in that** the pressure control mechanism has at least one control valve (22, 24) which is in communication with the mould cavity (4).

38. Device according to claim 36 or 37, **characterised in that** the supply line (5) is equipped with a control valve (22).

39. Device according to one of the claims 36 to 38, **characterised in that** the supply line (5) is connected to a pressure generator which is in communication with the mould cavity (4).

40. Device according to one of the claims 36 to 39, **characterised in that** the discharge line (6) is equipped with a control valve (24).

41. Device according to claim 40, **characterised in that** a liquid receiver (38), such as a siphon, is disposed in the discharge line (6) between the mould cavity (4) and the control valve (24).

42. Device according to one of the claims 36 to 41, **characterised in that** the pressure control mechanism is in communication with the mould cavity (4) via a porous region (13) which delimits at least one part of the mould cavity (4).

43. Device according to one of the claims 36 to 42, **characterised in that** the discharge line (6) is connected to a plurality of mould walls of the mould cavity (4).

44. Device according to claim 42 or 43, **characterised in that** channels (15) for connecting the pressure control mechanism are disposed distributed about the mould cavity (4) on the porous region (13) which delimits the mould cavity (4).

45. Device according to claim 44, **characterised in that** the channels (15) are united into a ring line (16).

46. Device according to one of the claims 34 to 45, **characterised in that** a conveying worm (41) is assigned to the mould cavity (4), by means of which the particles (19) can be supplied.

47. Device according to claim 46, **characterised in that** a supply mechanism (43) for the radiation-absorbing liquid (27) is assigned to the conveying worm (41) and the particles can be supplied dispersed in said radiation-absorbing liquid to the mould cavity (4).

48. Device according to one of the claims 34 to 47, **characterised in that** the mould cavity (4) is formed by a form tool (1), which comprises a stationary tool part (2) and a moveable tool part (3), which closes the mould cavity (4) in one position thereof, in the other position thereof permits filling of the particles (19).

49. Device according to claim 48, **characterised in that** the moveable tool part (2) plunges into the stationary tool part (5).

50. Device according to claim 48 or 49, **characterised in that** the stationary tool part (2) has connections (8, 9) for the supply line (5) and for the discharge line (6).

51. Device according to one of the claims 48 to 50, **characterised in that** a filling opening (45) for filling the particles (19) is disposed on the stationary tool part (2) outwith the mould cavity (4) but within the travel path (40) of the moveable tool part (3), which filling opening can be overrun by said moveable tool part (3).

52. Device according to one of the claims 48 to 51, **characterised in that** the moveable tool part (3) can be moved linearly.

53. Device according to one of the claims 48 to 52, **characterised in that** the form tool (1) comprises a material which is at least partially permeable for high frequency electromagnetic radiation (26).

54. Device according to one of the claims 48 to 53, **characterised in that** the form tool (1) comprises a radiation-permeable, temperature-stable plastic material which forms the mould cavity (4) and a likwise radiation-permeable plastic material which substantially absorbs the mechanical forces.

55. Device according to one of the claims 48 to 54, **characterised in that** at least a part of the faces of the form tool (1) which delimit the mould cavity (4) are provided with a coating which is at least partially active with respect to the radiation.

56. Device according to claim 55, **characterised in that** an inlay made of the partially active material is provided, which inlay can be inserted into the mould cavity (4).

57. Device according to one of the claims 48 to 52, **characterised in that** the form tool (1) comprises a material which is substantially impermeable for the radiation (26) and the radiation (26) can be coupled into the mould cavity (4).

58. Device according to one of the claims 48 to 57, **characterised in that** the form tool (1) has liquid channels (17) which surround the mould cavity (4) for temperature control of the form tool (1) and/or of the moulded articles (25, 48).

59. Device according to one of the claims 48 to 58, **characterised in that** a plurality of form tools (1) on a transport stretch can be guided in succession past at least one high frequency electromagnetic radiation field (26).

60. Device according to claim 59, **characterised in that** a plurality of form tools (1) is disposed on a carousel with at least one filling station (A, B), at least one station (C) with the radiation field (26) and at least one withdrawal station (E) for the moulded articles (25).

61. Device according to one of the claims 34 to 60, **characterised in that** the direction of the radiation field (26) relative to the mould cavity (4) can be changed.

62. Device according to one of the claims 34 to 61, **characterised in that** the high frequency electromagnetic radiation field (26) and the mould cavity (4) are shielded at least during the irradiation by a wall (28) which encloses them and is impermeable for electromagnetic radiation (26).

63. Device according to one of the claims 34 to 62, **characterised in that** the high frequency electromagnetic field (26) is a microwave field.

## Revendications

1. Procédé pour lier thermiquement des particules d'au moins un polymère expansé, pré-expansé et/ou expansible sous forme de charge pour former des pièces moulées au moyen d'un rayonnement électromagnétique à haute fréquence, dans lequel les particules sont fusionnées entre elles, au moins en surface, pour former la pièce moulée par contact de leurs interfaces et action du rayonnement en présence d'un milieu liquide absorbant le rayonnement électromagnétique, cette pièce moulée étant ensuite refroidie,
**caractérisé en ce que**
l'espace vide autour de la charge est pratiquement totalement rempli par le milieu liquide avant ou pendant le rayonnement.

2. Procédé selon la revendication 1,
**caractérisé en ce que**
le rayonnement électromagnétique à haute fréquence est mis en oeuvre dans une plage de fréquence comprise entre 100 MHz et 10 GHz (rayonnement micro-onde).

3. Procédé selon la revendication 1 ou 2,
**caractérisé en ce qu'**
on met en oeuvre des particules expansées de polymères expansibles.

4. Procédé selon l'une quelconque des revendications 1 à 3,
**caractérisé en ce que**
la charge de particules est renfermée dans une cavité de moule.

5. Procédé selon la revendication 4,
**caractérisé en ce que**
les particules en vrac sont chargées dans la cavité de moule.

6. Procédé selon l'une quelconque des revendications 1 à 5,
**caractérisé en ce que**
la charge est compactée dans la cavité de moule.

7. Procédé selon l'une quelconque des revendications 1 à 6,
**caractérisé en ce que**
le rapport massique des particules par rapport au milieu liquide est régulé par la pression régnant dans la cavité de moule avant et/ou après le remplissage des particules.

8. Procédé selon l'une quelconque des revendications 1 à 7,
**caractérisé en ce que**
les particules sont chargées dans la cavité de moule et le milieu liquide est introduit dans la cavité de moule en refoulant l'air se trouvant dans la charge de particules.

9. Procédé selon l'une quelconque des revendications 1 à 8,
**caractérisé en ce que**
le milieu liquide est introduit par le fond dans la cavité de moule.

10. Procédé selon l'une quelconque des revendications 1 à 9,
**caractérisé en ce que**
la charge de particules est comprimée mécaniquement dans la cavité de moule et le milieu liquide est ensuite introduit dans la cavité de moule.

11. Procédé selon l'une quelconque des revendications 1 à 10,
**caractérisé en ce qu'**
au moins une partie des particules est mise en dispersion dans le milieu liquide et la dispersion est chargée dans la cavité de moule.

12. Procédé selon la revendication 11,
**caractérisé en ce que**
la dispersion est chargée sous pression dans la cavité de moule.

13. Procédé selon la revendication 11 ou 12,
**caractérisé en ce que**
la dispersion est chargée dans la cavité de moule au moyen d'un organe de refoulement à vis ou à piston.

14. Procédé selon l'une quelconque des revendications 1 à 7,
**caractérisé en ce que**
le milieu liquide est introduit dans la cavité de moule et les particules sont chargées en refoulant le milieu liquide de la cavité de moule.

15. Procédé selon la revendication 14,
**caractérisé en ce que**
le milieu liquide est mis sous pression dans la cavité de moule et les particules sont chargées sous pression plus élevée.

16. Procédé selon l'une quelconque des revendications 1 à 15,
**caractérisé en ce que**
le milieu liquide est vaporisé au moins partiellement au moyen du rayonnement électromagnétique à haute fréquence en générant une pression dans la cavité de moule.

17. Procédé selon l'une quelconque des revendications 1 à 16,
**caractérisé en ce que**
la température régnant à l'intérieur de la cavité de moule est régulée par la pression du milieu absorbant le rayonnement.

18. Procédé selon la revendication 17,
**caractérisé en ce que**
la pression régnant à l'intérieur de la cavité de moule est régulée via la pression de vapeur du milieu absorbant le rayonnement.

19. Procédé selon la revendication 17 ou 18,
**caractérisé en ce que**
la pression à l'intérieur de la cavité de moule après avoir atteint la température de soudure souhaitée, est maintenue pratiquement constante par évacuation de liquide.

20. Procédé selon l'une quelconque des revendications 17 à 19,
**caractérisé en ce que**
la pression régnant à l'intérieur de la cavité de moule est réduite par évacuation de liquide, après que la température de soudure souhaitée a été atteinte et éventuellement maintenue.

21. Procédé selon la revendication 20,
**caractérisé en ce que**
la pression régnant à l'intérieur de la cavité de moule est subitement réduite.

22. Procédé selon l'une quelconque des revendications 1 à 21,
**caractérisé en ce que**
la pièce moulée obtenue par liaison thermique des particules est séchée essentiellement sans pression au moyen du rayonnement électromagnétique.

23. Procédé selon l'une quelconque des revendications 1 à 21,
**caractérisé en ce que**
la pièce moulée est séchée en appliquant une dépression au niveau de la cavité de moule.

24. Procédé selon l'une quelconque des revendications 1 à 23,
**caractérisé en ce que**
la cavité de moule et/ou la pièce moulée est tempérée.

25. Procédé selon l'une quelconque des revendications 1 à 24,
**caractérisé en ce qu'**
au moins une couche support, notamment constituée d'au moins un polymère, est disposée dans la cavité de moule et est revêtue d'une sous-couche ou d'une couverture de particules.

26. Procédé selon l'une quelconque des revendications 1 à 25,
**caractérisé en ce qu'**
au moins une couche de finition, notamment constituée d'au moins un polymère, est disposée dans la cavité de moule et est revêtue d'une sous-couche de particules.

27. Procédé selon la revendication 25 ou 26,
**caractérisé en ce que**
la couche support et/ou la couche de finition sont revêtues sur leur interface avec les particules d'au moins une substance absorbant le rayonnement.

28. Procédé selon l'une quelconque des revendications 1 à 27,
**caractérisé en ce que**
la cavité de moule se compose d'un outil de moulage verrouillable et la charge de particules est soudée en discontinu pour former la pièce moulée lorsque l'outil de moulage est fermé.

29. Procédé selon la revendication 28,
**caractérisé en ce que**
plusieurs appareils de moulage sont disposés sur un tourniquet comportant un poste présentant le champ électromagnétique à haute fréquence.

30. Procédé selon l'une quelconque des revendications 1 à 27,
**caractérisé en ce que**
la cavité de moule est formée entre des bandes de support rotatives et la charge de particules circule en continu au moyen des bandes de support devant au moins une source de rayonnement électromagnétique à haute fréquence et est soudée pour former une pièce moulée essentiellement en forme de cordon.

31. Procédé selon l'une quelconque des revendications 1 à 27,
**caractérisé en ce que**
la cavité de moule est formée par un cylindre ouvert et la charge de particules chargée latéralement dans ce cylindre au moyen d'un organe de refoulement est transférée en continu en passant devant au moins une source de rayonnement électromagnétique à haute fréquence et est soudée pour former une pièce moulée essentiellement en forme de cordon.

32. Procédé selon la revendication 31,
**caractérisé en ce que**
les particules sont entraînées à l'encontre d'une section étranglée du cylindre au moyen de l'organe de refoulement.

33. Procédé selon l'une quelconque des revendications 30 à 32,
**caractérisé en ce que**
les pièces moulées essentiellement en forme de cordon sont coupées à longueur pour former des blocs, des plaques, des cylindres et autres formes.

34. Dispositif pour lier thermiquement des particules (19) d'au moins un polymère expansé, pré-expansé et/ou expansible sous forme de charge (20) pour former une pièce moulée (25, 48), comportant une cavité de moule (4) qui reçoit les particules (19) et comportant une conduite d'entrée (5) servant à remplir la cavité de moule (4) avec un fluide absorbant le rayonnement (27) et une conduite de sortie (6) servant au retrait de l'air et/ou à l'évacuation du fluide (27) ainsi qu'au moins un champ de rayonnement électromagnétique à haute fréquence (26), permettant notamment de mettre en oeuvre le procédé selon l'une quelconque des revendications 1 à 33,
**caractérisé en ce que**
la conduite d'entrée (5) débouche dans la cavité de moule (4) à l'endroit où celle-ci est la plus profonde, et la cavité de moule (4) présente éventuellement un trop-plein (7) pour le fluide (27) lors du remplissage.

35. Dispositif selon la revendication 34,
**caractérisé en ce que**
le trop-plein (7) est disposé à l'endroit le plus élevé de la cavité de moule (4).

36. Dispositif selon la revendication 34 ou 35,
**caractérisé par**
un dispositif de réglage de pression communiquant avec la cavité de moule (4) et servant à régler la pression régnant dans la cavité de moule (4).

37. Dispositif selon la revendication 36,
**caractérisé en ce que**
le dispositif de réglage de pression présente au moins une vanne de réglage (22, 24) raccordée à la cavité de moule (4).

38. Dispositif selon la revendication 36 ou 37,
**caractérisé en ce que**
la conduite d'entrée (5) est munie d'une vanne de réglage (22).

39. Dispositif selon l'une quelconque des revendications 36 à 38,
**caractérisé en ce que**
la conduite d'entrée (5) est couplée à un générateur de pression (23) relié à la cavité de moule (4).

40. Dispositif selon l'une quelconque des revendications 36 à 39,
**caractérisé en ce que**
la conduite de sortie (6) est munie d'une vanne de réglage (24).

41. Dispositif selon la revendication 40,
**caractérisé en ce qu'**
un collecteur de fluide (38) tel qu'un siphon est disposé dans la conduite de sortie (6) entre la cavité de moule (4) et la vanne de réglage (24).

42. Dispositif selon l'une quelconque des revendications 36 à 41,
**caractérisé en ce que**
le dispositif de réglage de pression est relié à la cavité de moule (4) sur une zone poreuse (13) délimitant au moins une partie de la cavité de moule (4).

43. Dispositif selon l'une quelconque des revendications 36 à 42,
**caractérisé en ce que**
la conduite de sortie (6) est couplée à plusieurs parois de moulage de la cavité de moule (4).

44. Dispositif selon la revendication 42 ou 43,
**caractérisé en ce que**
des canaux (15) répartis autour de la cavité de moule et destinés au couplage du dispositif de réglage de pression sont disposés au niveau de la zone poreuse (13) délimitant la cavité de moule (4).

45. Dispositif selon la revendication 44,
**caractérisé en ce que**
les canaux (15) sont raccordés à un circuit (16).

46. Dispositif selon l'une quelconque des revendications 34 à 45,
**caractérisé en ce qu'**
un transporteur à vis sans fin (41) est associé à la cavité de moule (4) et permet d'amener les particules (19).

47. Dispositif selon la revendication 46,
**caractérisé en ce qu'**
un dispositif d'apport (43) pour le fluide absorbant le rayonnement (27) est associé au transporteur à vis sans fin (41), et permet d'amener dans la cavité de moule (4) les particules (19) en dispersion dans ce fluide.

48. Dispositif selon l'une quelconque des revendications 34 à 47,
**caractérisé en ce que**
la cavité de moule (4) est constituée d'un outil de moulage (1) se composant d'une partie fixe d'outil (2) et d'une partie mobile d'outil (3) qui ferme la cavité de moule (4) dans une position et permet de la remplir avec les particules (19) dans l'autre position.

49. Dispositif selon la revendication 48,
**caractérisé en ce que**
la partie mobile d'outil (3) s'emboîte dans la partie fixe d'outil (2).

50. Dispositif selon la revendication 48 ou 49,
**caractérisé en ce que**
la partie fixe d'outil (2) présente des raccords (8, 9) pour la conduite de sortie (5) et pour la conduite de sortie (6).

51. Dispositif selon l'une quelconque des revendications 48 à 50,
**caractérisé en ce que**
sur la partie fixe d'outil (2) à l'extérieur de la cavité de moule (4) mais à l'intérieur de la course (40) de la partie mobile d'outil (3) une ouverture de remplissage (45) franchissable par cette dernière est disposée pour introduire les particules (19).

52. Dispositif selon l'une quelconque des revendications 48 à 51,
**caractérisé en ce que**
la partie mobile d'outil (3) est déplaçable de manière linéaire.

53. Dispositif selon l'une quelconque des revendications 48 à 52,
**caractérisé en ce que**
l'outil de moulage (1) se compose d'un matériau au moins partiellement perméable au rayonnement électromagnétique à haute fréquence (26).

54. Dispositif selon l'une quelconque des revendications 48 à 53,
**caractérisé en ce que**
l'outil de moulage (1) se compose d'une matière plastique thermiquement stable, perméable au rayonnement pour former la cavité de moule (4) et d'une matière plastique également perméable au rayonnement, absorbant essentiellement les forces mécaniques.

55. Dispositif selon l'une quelconque des revendications 48 à 54,
**caractérisé en ce qu'**
au moins une partie des surfaces de l'outil de moulage (1) qui délimitent la cavité de moule (4) sont munies d'un revêtement au moins partiellement actif par rapport au rayonnement.

56. Dispositif selon la revendication 55,
**caractérisé en ce qu'**
il est prévu un « inlay » en matériau partiellement actif qui peut être introduit dans la cavité de moule (4).

57. Dispositif selon l'une quelconque des revendications 48 à 52,
**caractérisé en ce que**
l'outil de moulage (1) se compose d'un matériau essentiellement imperméable au rayonnement (26) et le rayonnement (26) peut être couplé dans la cavité de moule (4).

58. Dispositif selon l'une quelconque des revendications 48 à 57,
**caractérisé en ce que**
l'outil de moulage (1) présente des canaux pour fluide (17) répartis autour de la cavité de moule (4) servant à tempérer l'outil de moulage (1) et/ou les pièces moulées (25, 48).

59. Dispositif selon l'une quelconque des revendications 48 à 58,
**caractérisé en ce que**
plusieurs appareils de moulage (1) peuvent circuler l'un après l'autre sur une course de transport devant au moins un champ de rayonnement électromagnétique à haute fréquence (26).

60. Dispositif selon la revendication 59,
**caractérisé en ce que**
plusieurs appareils de moulage (1) sont disposés sur un tourniquet comportant au moins un poste de remplissage (A, B), au moins un poste (C) comportant le champ de rayonnement (26) et au moins un poste de retrait (E) des pièces moulées (25)

61. Dispositif selon l'une quelconque des revendications 34 à 60,
**caractérisé en ce que**
la direction du champ de rayonnement (26) est modifiable par rapport à la cavité de moule (4).

62. Dispositif selon l'une quelconque des revendications 34 à 61,
**caractérisé en ce que**
le champ de rayonnement électromagnétique à haute fréquence (26) et la cavité de moule (4) sont abrités, au moins pendant l'irradiation, par une paroi (28) imperméable au rayonnement électromagnétique (26) qui les enceint.

63. Dispositif selon l'une quelconque des revendications 34 à 62,
**caractérisé en ce que**
le champ de rayonnement électromagnétique à haute fréquence (26) est un champ de micro-ondes.
